(19) Europäisches Patentamt
European Patent Office
Office européen des brevets

(11) EP 4 362 128 A1

(12) EUROPEAN PATENT APPLICATION

(43) Date of publication:
01.05.2024 Bulletin 2024/18

(21) Application number: 23206514.4

(22) Date of filing: 27.10.2023

(51) International Patent Classification (IPC):
*H01M 4/04* (2006.01) *H01M 10/0525* (2010.01)
*H01M 4/13* (2010.01) *H01M 4/36* (2006.01)
*H01M 4/62* (2006.01) *H01M 4/525* (2010.01)

(52) Cooperative Patent Classification (CPC):
**H01M 10/0525; H01M 4/0414; H01M 4/13; H01M 4/62;** H01M 4/366; H01M 4/525; H01M 4/625; H01M 2300/0071

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 JP 2022174736**
**30.11.2022 JP 2022191032**

(71) Applicant: **Ricoh Company, Ltd.**
**Tokyo 143-8555 (JP)**

(72) Inventors:
- **OHYA, Kayato**
**Tokyo, 143-8555 (JP)**
- **HIGASHI, Ryuji**
**Tokyo, 143-8555 (JP)**
- **TAKEUCHI, Shigeo**
**Tokyo, 143-8555 (JP)**
- **SONE, Yuji**
**Tokyo, 143-8555 (JP)**
- **SAGISAKA, Toshiya**
**Tokyo, 143-8555 (JP)**
- **NOGUCHI, Soh**
**Tokyo, 143-8555 (JP)**
- **DAN, Tatsuya**
**Tokyo, 143-8555 (JP)**
- **NAKAJIMA, Satoshi**
**Tokyo, 143-8555 (JP)**
- **KURIYAMA, Hiromichi**
**Tokyo, 143-8555 (JP)**

(74) Representative: **Marks & Clerk LLP**
**15 Fetter Lane**
**London EC4A 1BW (GB)**

# (54) LIQUID COMPOSITION, METHOD FOR PRODUCING LIQUID COMPOSITION, ELECTRODE, ELECTRODE PRODUCTION APPARATUS, AND METHOD FOR PRODUCING ELECTRODE

(57) A liquid composition includes an active material, an organic solvent represented by General Formula (A), and water in an amount of 1 ppm or greater and 50 ppm or less.

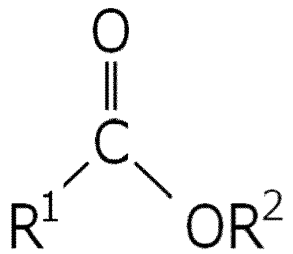

General Formula (A)

In General Formula (A), $R^1$ and $R^2$ are each independently a straight-chain alkyl group or a branched-chain alkyl group.

EP 4 362 128 A1

**Description**

BACKGROUND OF THE INVENTION

1. Field of the Invention

The disclosures herein generally relate to a liquid composition, a method for producing a liquid composition, an electrode, an electrode production apparatus, and a method for producing an electrode.

2. Description of the Related Art

Electrochemical elements, such as lithium ion secondary battery cells, are mounted in mobile devices, hybrid cars, electric cars, etc. Demands for such electrochemical elements have increased. Moreover, there are high demands for thin battery cells that can be mounted in various wearable devices or medical patches. Accordingly, a diverse range of properties or characteristics is desired for lithium ion secondary battery cells.

An electrode includes an active material layer, including an electrode composite material layer that is a layer contributing to battery characteristics, such as a capacity and electromotive force. A liquid composition for forming an electrode composite material layer generally includes an active material, an organic solvent, and a binder. A polymer is commonly used as the binder. To improve productivity, the liquid composition for forming the electrode composite material layer is prepared to have a high solid content. Therefore, the liquid composition for forming the electrode composite material layer generally has a high viscosity, e.g., $10^3$ mPa·s to $10^4$ mPa·s, and is typically in the state of slurry. As a method for producing an electrode constituting a lithium ion secondary battery cell, therefore, a method of the related art includes applying a liquid composition for forming an electrode composite material layer onto an electrode substrate using a die coater, comma coater, reverse-roll coater, etc., to form an electrode composite material layer.

In recent years, a production method, in which a liquid composition for an electrode composite material layer is applied using inkjet printing, has attracted attention considering a cost reduction of materials and a reduction in environmental loads, as the inkjet printing can easily achieve intermittent coating. However, inkjet printing is typically a production method using a liquid composition having a low viscosity as a coating material. Even for a high-viscosity liquid composition used for inkjet printing, the upper limit of the viscosity of the liquid composition is 200 mPa·s. Therefore, it is important to achieve the level of the viscosity of the liquid composition that is 1/10 to 1/100 times lower than viscosity of existing slurry liquid compositions for the electrode composite material layer.

As an electrode composite material layer liquid composition having a low viscosity, the following electrode composite material layer composition for inkjet printing has been proposed. The electrode composite material layer composition for inkjet printing includes a binder. An amount of the binder resin is 0.01% by weight to 0.5% by weight, where the binder is a 1% by weight aqueous solution having a viscosity of 2 mPa·s to 20 mPa·s. A viscosity of the electrode composite material layer composition is 3.1 mPa·s to 5.8 mPa·s (see, for example, Japanese Unexamined Patent Application Publication (JP-A) No. 2009-152180).

As an electrode composite material layer liquid composition having a high solid content, for example, the following binder composition for a non-aqueous secondary battery electrode and the following slurry composition for an electrode composite material have been reported. The binder composition includes a binder including a polymer A. The polymer A includes an ethylenically unsaturated acid monomer unit in an amount of 1.00% by mass or greater and 10.00% by mass or less. When the polymer A is mixed with an organic solvent to prepare a mixture having a polymer A concentration of 8% by mass, a viscosity of the mixture at a shear rate of 0.1 $s^{-1}$ is 10,000 mPa·s or less. The binder composition is used to prepare the slurry composition for the electrode composite material, and the slurry composition having a high solid content of 75% by weight or greater (see, for example, International Publication No. WO 2019/044452).

SUMMARY OF THE INVENTION

In one aspect of the present disclosure, a liquid composition includes an active material, an organic solvent represented by General Formula (A), and water in an amount of 1 ppm or greater and 50 ppm or less.

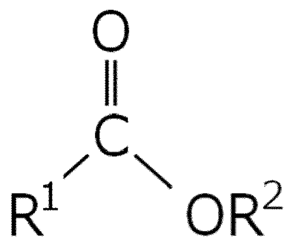

General Formula (A)

In General Formula (A), $R^1$ and $R^2$ are each independently a straight-chain alkyl group or a branched-chain alkyl group.

BRIEF DESCRIPTION OF THE DRAWINGS

Fig. 1 is a cross-sectional view illustrating an example of a negative electrode of the present embodiment;
Fig. 2 is a cross-sectional view illustrating an example of a positive electrode of the present embodiment;
Fig. 3 is a schematic view illustrating an example of the method of producing an electrode of the present embodiment;
Fig. 4 is a schematic view illustrating an example of the electrode production apparatus of the present embodiment;
Fig. 5 is a schematic view illustrating another example of the electrode production apparatus of the present embodiment;
Fig. 6 is a schematic view illustrating another example of the method for producing an electrode of the present embodiment;
Fig. 7 is a schematic view illustrating a modification example of a liquid jet device;
Fig. 8 is a schematic view illustrating a printer using a drum-shaped intermediate transfer member, serving as the electrode production apparatus of the present embodiment;
Fig. 9 is a schematic view illustrating a printer using an endless-belt type intermediate transfer member, as the electrode production apparatus of the present embodiment;
Fig. 10 is a cross-sectional view illustrating an example of an electrode element used for the electrochemical element of the present embodiment; and
Fig. 11 is a cross-sectional view illustrating an example of the electrochemical element of the present embodiment.

DESCRIPTION OF THE PREFERRED EMBODIMENTS

In the following, embodiments of the present invention will be described with reference to the accompanying drawings.
Further, the present invention is not limited to these embodiments, but various variations and modifications may be made without departing from the scope of the present invention.

(Liquid composition)

The liquid composition of the present disclosure includes an active material, an organic solvent, and water. The liquid composition preferably further includes a conductive agent, such as a carbon-based material, and may further include other components, as necessary.
The organic solvent is represented by General Formula (A) below. An amount of the water in the liquid composition is 1 ppm or greater and 50 ppm or less.

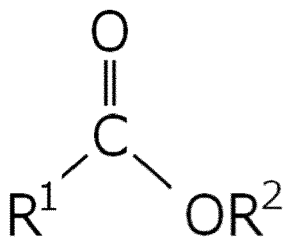

General Formula (A)

In General Formula (A), $R^1$ and $R^2$ are each independently a straight-chain alkyl group or a branched-chain alkyl group.

The present disclosure aims to provide a liquid composition achieving excellent dispersibility of an active material, and having both a high solid content and a low viscosity.

The present disclosure can provide a liquid composition achieving excellent dispersibility of an active material, and having both a high solid content and a low viscosity.

The present inventors have discovered the following problems existing in the related art. The liquid composition of the present disclosure has been accomplished to solve the following problems.

Specifically, an electrode composite material layer composition for inkjet printing is disclosed in JP-A No. 2009-152180. The solid content of the disclosed electrode composite material layer composition for inkjet printing is only 20% by mass to 40% by mass, whereas a solid content of a typical slurry liquid composition for an electrode composite material layer is 60% by mass to 70% by mass. Therefore, the disclosed electrode composite material layer composition has lower productivity as compared to typical slurry liquid compositions for electrode composite material layers.

Moreover, a slurry liquid composition for an electrode composite material layer using a binder composition is disclosed in WO 2019/044452. In order to adjust a viscosity of the disclosed slurry liquid composition to the viscosity range usable for inkjet printing, the disclosed slurry liquid composition needs to be diluted to have a solid content lower than a solid content of a typical slurry composition for an electrode composite material layer.

According to the research conducted by the present inventors, moreover, it is confirmed that a viscosity of an electrode composite layer liquid composition starts significantly increasing at the point where the solid content of the electrode composite material layer liquid composition exceeds 60% by mass, even when the liquid composition has a high concentration of a dispersing agent to achieve high dispersibility of an active material. Moreover, it has been made clear that a secondary battery cell using an electrode composite material layer liquid composition having an increased concentration of a dispersing agent significantly impairs input-output characteristics, compared to a secondary battery cell using a slurry-based liquid composition free from a dispersing agent. It is assumed that the input-output characteristics of the secondary battery cell using the dispersing agent are impaired because the dispersing agent is adsorbed on a surface of the active material to interfere in electron conduction and ion conduction.

Therefore, much improvement is desired to develop a liquid composition achieving excellent dispersibility of an active material and having both a high solid content and a low viscosity.

The present inventors have diligently conducted research to achieve the above-described object. As a result, the present inventors have gained the following insight, and the present disclosure has been accomplished based on the insight of the present inventors. Namely, the liquid composition of the present disclosure can achieve excellent dispersibility of the active material and can have both a high solid content and a low viscosity.

[Dispersibility]

The dispersibility of the active material in the liquid composition can be evaluated with a dispersibility index represented by the following equation. The dispersibility index represents a relationship between a median diameter $D_{50}$ of particles of the active material in the liquid composition and a mean diameter $d_{50}$ of primary particles of the active material.
(Equation)

Dispersibility index = median dimeter $D_{50}$ of the particles of the active material in the liquid composition/mean diameter $d_{50}$ of the primary particles of the active material

The dispersibility index is preferably 2.0 or less, more preferably 1.5 or less.

When the dispersibility index is 2.0 or less, a ratio of the surfaces of the active material particles exposed is notably high to achieve excellent dispersibility. Therefore, smooth movements of charges via the surfaces of the active material particles are achieved, thus excellent battery characteristics are obtained. When other components including a conductive agent are added, for example, a contact area between the active material and the conductive agent increases, improving battery characteristics even further.

The median diameter $D_{50}$ of the particles of the active material is not particularly limited, and may be appropriately selected according to the intended purpose. The median diameter $D_{50}$ of the particles of the active material is preferably 0.5 μm or greater and 50 μm or less, more preferably 1 μm or greater and 30 μm or less, and yet more preferably 3 μm or greater and 12 μm or less.

When the median diameter $D_{50}$ of the particles of the active material is 0.5 μm or greater, an amount of a conductive agent, which is added to improve electron conductivity of an electrode composite material layer, can be reduced to increase a capacity of the electrochemical element. When the median diameter $D_{50}$ of the particles of the active material is 30 μm or less, storage stability of a resulting liquid composition can be improved.

A method for measuring the median diameter $D_{50}$ of the particles of the active material is not particularly limited, and may be appropriately selected according to the intended purpose. For example, the median diameter $D_{50}$ of the particles of the active material can be measured according to ISO 13320:2009 at room temperature (25°C). A device used for the measurement is not particularly limited, and may be appropriately selected according to the intended purpose. Examples of the device include a laser diffraction particle size analyzer (Mastersizer 3000, available from Malvern Panalytical Ltd.).

The mean diameter $d_{50}$ of the primary particles of the active material is not particularly limited, and may be appropriately selected according to the intended purpose. The mean diameter $d_{50}$ of the primary particles of the active material is preferably 0.5 μm or greater and 50 μm or less, more preferably 1 μm or greater and 30 μm or less, and yet more preferably 3 μm or greater and 12 μm or less.

When the mean diameter $d_{50}$ of the primary particles of the active material is 0.5 μm or greater, it is not necessary to additionally add a large amount of a conductive agent to improve electron conduction of the electrode composite material layer so that a capacity of an electrochemical element can be increased. When the mean diameter $d_{50}$ of the primary particles of the active material is 30 μm or less, storage stability of a resulting liquid composition can be improved.

As a method for producing the mean diameter $d_{50}$ of the primary particles of the active material, specifically, the population of the particles of the active material is observed using a scanning electron microscope (available from JEOL Ltd.) to determine a particle size distribution based on a volume standard, and a median diameter is calculated from the particle size distribution.

[Viscosity]

A viscosity of the liquid composition is a steady shear viscosity measured at a rotation speed of 100 rpm at 25°C.

The viscosity at the rotation speed of 100 rpm at 25°C is not particularly limited, and may be appropriately selected according to the intended purpose. The viscosity is preferably 4 mPa·s or greater and 200 mPa·s or less, more preferably 20 mPa·s or greater and 100 mPa·s or less, and yet more preferably 30 mPa·s or greater and 60 mPa·s or less.

When the steady shear viscosity of the liquid composition at the rotation speed of 100 rpm at 25°C is 4 mPa·s or greater, a sedimentation rate of the particles of the active material is maintained at a suitable level without being too fast so that storage stability of a resulting liquid composition can be improved. When the steady shear viscosity of the liquid composition at the rotation speed of 100 rpm at 25°C is 200 mPa·s or less, moreover, an inkjet ejection behavior can be improved.

A method for measuring a viscosity of the liquid composition is not particularly limited, and may be appropriately selected according to the intended purpose. For example, the viscosity of the liquid composition can be measured according to the method specified in JIS Z 8803. A device used for the measurement is not particularly limited, and may be appropriately selected according to the intended purpose. Examples of the device include a TV25 type viscometer (cone plate viscometer, available from Toki Sangyo Co., Ltd.).

[Solid content]

A solid content of the liquid composition is not particularly limited, and may be appropriately selected according to the intended purpose. The solid content of the liquid composition is preferably 50% by mass or greater, more preferably 60% by mass or greater, and yet more preferably 70% by mass or greater. Since the solid content of the liquid composition is 50% by mass or greater, the liquid composition is likely to exhibit thixotropy to improve dispersion stability. Therefore, flowing of the liquid composition is suppressed during a process of drying the applied liquid composition so that unevenness in a thickness and composition of a dried film of the liquid composition can be minimized. Moreover, effects of shortening a drying time to improve productivity, reducing environmental loads, and reducing a production cost can be obtained.

The "solid content" of the liquid composition is a percentage of a mass of the contents (components) excluding the organic solvent and water relative to a total mass of the liquid composition.

A method for measuring the solid content of the liquid composition is not particularly limited, and may be appropriately selected according to the intended purpose. When the formulation of the liquid composition is known, examples of the method include a method where the solid content of the liquid composition is determined by the following equation. When the formulation of the liquid composition is unknown, examples of the method include a method where the solid content is measured according to JIS K5601-1-2.

(Equation)

Solid content = {total solids (parts by mass)/(total solids (parts by mass) + organic solvent (parts by mass) + water (parts by mass))}×100(%)

A device for measuring the measurement is not particularly limited, and may be appropriately selected according to the intended purpose. Examples of the device include a heating and drying method moisture analyzer (MX-50, available from A&D Company, Limited).

<Organic solvent>

The organic solvent used in the present disclosure is a component for dispersing the active material in the liquid composition. Moreover, the organic solvent has a boiling point at ambient pressure and evaporates during a drying process. Based on the above-described properties, the organic solvent is generally clearly distinguished from liquid dispersing agents that are non-volatile and thermally decomposed.

The organic solvent is represented by General Formula (A) below.

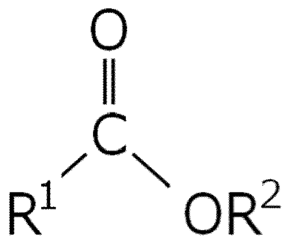

General Formula (A)

In General Formula (A), $R^1$ and $R^2$ are each independently a straight-chain alkyl group or a branched-chain alkyl group.

When the organic solvent is used, desirable dispersibility of the active material is obtained, and both a high solid content and a low viscosity can be achieved. Although a reason why the above-described desirable properties are obtained is not clear, it is assumed that oxygen of the carbonyl group of the organic solvent is attracted to the surface of the active material so that the alkyl group of the organic solvent functions as a dispersing group to exhibit an effect similar to an effect of a typical dispersing agent.

A typical dispersing agent includes a plurality of adsorption groups within a molecule of the dispersing agent.

Even if one of the adsorption groups is detached from the surface of the active material, therefore, the dispersing agent is unlikely to detach from the surface of the active material completely. Since the dispersing agent includes a very long dispersing group, moreover, strong steric or static repulsion is caused between the dispersing groups of the dispersing agent molecules to exhibit a dispersing effect.

Conversely, it is assumed that oxygen of the carbonyl moiety of the organic solvent in the present disclosure functions as a main adsorption site for the active material, oxygen of the ether moiety of the organic solvent functions as an auxiliary adsorption site, and alkyl chains extending to the both sides of the molecule of the organic solvent function as dispersion sites. Specifically, the organic solvent used in the present disclosure has characteristics that there are only two adsorption sites per molecule of the organic solvent, and the length of each dispersion site is very short compared to a dispersion site of a typical dispersing agent. Because of the nature of use as the organic solvent, the organic solvent is present near the active material at a high concentration. Even if one molecule of the organic solvent is detached from the active material, therefore, another molecule of the organic solvent is immediately attracted and adsorbed onto the surface of the active material. As a result, a desirable dispersing effect is achieved. As the characteristics of the organic solvent are described above, the molecular weight of the organic solvent is extremely small compared to a typical dispersing agent. Specifically, the organic solvent has a high vapor pressure and is easily removed during a process of drying. Therefore, the intrinsic performance of the active material can be exhibited, particularly when the liquid composition is used for an electrochemical element for which functions of the formed surface of the active material (e.g., a catalytic activity, electron conduction, and ion conduction) are important.

The organic solvent is not particularly limited, except that the organic solvent is represented by General Formula (A). The organic solvent may be appropriately selected according to the intended purpose. $R^1$ is preferably selected from a straight-chain alkyl group having 3 or more carbon atoms and a branched-chain alkyl group having 3 or more carbon atoms. $R^2$ is preferably a methyl group or an ethyl group.

When the above-described organic solvent is used, desirable dispersion stability of the active material is obtained, and a liquid composition having a low viscosity and a low thixotropic index compared to a typical liquid composition having the same solid content can be obtained. It is assumed that the above-described characteristics are obtained because the alkyl chain bonded to the oxygen of the ether group, which functions as the auxiliary adsorption site, is short so that the carbonyl group serving as the main adsorption site and the oxygen of the ether group serving as the auxiliary adsorption site are easily attracted to the surface of the active material.

In order for the organic solvent to be in a liquid state at room temperature (25°C), $R^1$ is preferably a straight-chain alkyl group having 12 or less carbon atoms, or a branched-chain alkyl group having 12 or less carbon atoms.

[Types of organic solvent]

The organic solvent includes an ester-based organic solvent including an ester group. Examples of the organic solvent include methyl acetate, ethyl acetate, propyl acetate, butyl acetate, pentyl acetate, hexyl acetate, heptyl acetate, octyl acetate, nonanyl acetate, decanyl acetate, isopropyl acetate, isobutyl acetate, isoamyl acetate, methyl propionate, ethyl propionate, propyl propionate, butyl propionate, pentyl propionate, hexyl propionate, heptyl propionate, octyl propionate, nonanyl propionate, decanyl propionate, isopropyl propionate, isobutyl propionate, methyl butyrate, ethyl butyrate, propyl butyrate, butyl butyrate, pentyl butyrate, hexyl butyrate, heptyl butyrate, octyl butyrate, nonanyl butyrate, decanyl butyrate, isopropyl butyrate, isobutyl butyrate, methyl valerate, ethyl valerate, propyl valerate, butyl valerate, pentyl valerate, hexyl valerate, heptyl valerate, octyl valerate, nonanyl valerate, decanyl valerate, isopropyl valerate, isobutyl valerate, isoamyl valerate (isopentyl valerate), methyl hexanoate, ethyl hexanoate, propyl hexanoate, butyl hexanoate, pentyl hexanoate, hexyl hexanoate, heptyl hexanoate, octyl hexanoate, nonanyl hexanoate, isopropyl hexanoate, isobutyl hexanoate, methyl heptanoate, ethyl heptanoate, propyl heptanoate, butyl heptanoate, pentyl heptanoate, hexyl heptanoate, heptyl heptanoate, octyl heptanoate, isopropyl heptanoate, isobutyl heptanoate, methyl octanoate, ethyl octanoate, propyl octanoate, butyl octanoate, pentyl octanoate, hexyl octanoate, heptyl octanoate, isopropyl octanoate, isobutyl octanoate, methyl nonanoate, ethyl nonanoate, propyl nonanoate, butyl nonanoate, pentyl nonanoate, hexyl nonanoate, isopropyl nonanoate, isobutyl nonanoate, methyl decanoate, ethyl decanoate, propyl decanoate, butyl decanoate, pentyl decanoate, isopropyl decanoate, isobutyl decanoate, methyl undecanoate, ethyl undecanoate, propyl undecanoate, butyl undecanoate, isopropyl undecanoate, isobutyl undecanoate, methyl dodecanoate, ethyl dodecanoate, propyl dodecanoate, isopropyl dodecanoate, methyl isobutyrate, ethyl isobutyrate, propyl isobutyrate, butyl isobutyrate, pentyl isobutyrate, hexyl isobutyrate, heptyl isobutyrate, octyl isobutyrate, nonanyl isobutyrate, decanyl isobutyrate, isopropyl isobutyrate, isobutyl isobutyrate, methyl isovalerate, ethyl isovalerate, propyl isovalerate, butyl isovalerate, pentyl isovalerate, hexyl isovalerate, heptyl isovalerate, octyl isovalerate, nonanyl isovalerate, decanyl isovalerate, isopropyl isovalerate, isobutyl isovalerate, isoamyl isovalerate, methyl isohexanoate, ethyl isohexanoate, propyl isohexanoate, butyl isohexanoate, pentyl isohexanoate, hexyl isohexanoate, heptyl isohexanoate, octyl isohexanoate, nonanyl isohexanoate, isopropyl isohexanoate, isobutyl isohexanoate, t-butyl acetate, hexyl 2-ethylacetate, ethyl pivalate, t-butyl propionate, methyl 2-ethylbutyrate, ethyl 2-ethylbutyrate, ethyl t-butylacetate, and ethyl DL-2-methylbutyrate.

Among the above-listed examples, the organic solvent, in which $R^1$ is selected from a straight-chain alkyl group having 3 or more carbon atoms and a branched-chain alkyl group having 3 or more carbon atoms, and $R^2$ is a methyl group or an ethyl group, is preferred in view of dispersion stability.

The above-listed examples may be used alone or in combination. Moreover, other organic solvents may be included, as long as such organic solvents do not adversely affect effects obtainable by the present disclosure.

[Mass ratio of organic solvent to active material]

A mass ratio of the organic solvent to the active material in the liquid composition is not particularly limited, except that effects obtainable by the present disclosure are not adversely affected. In view of storage stability, the mass ratio of the organic solvent to the active material is preferably 20% by mass or greater, more preferably 30% by mass or greater, and yet more preferably 40% by mass or greater. In view of fast drying in a drying process, the mass ratio of the organic solvent to the active material is preferably 70% by mass or less, more preferably 60% by mass or less.

[Boiling point of organic solvent]

As described above, the organic solvent preferably has a boiling point at ambient pressure.

The boiling point of the organic solvent is not particularly limited, and may be appropriately selected according to the intended purpose. In view of storage stability and handling of the organic solvent, the boiling point of the organic solvent is preferably 100°C or higher, more preferably 120°C or higher, and yet more preferably 150°C or higher. In view of fast drying during a drying process, the boiling point is preferably 300°C or lower, more preferably 250°C or lower, and yet more preferably 200°C or lower.

<Water>

An amount of the water (may be referred to as a "moisture content" hereinafter) is 1 ppm or greater and 50 ppm or less relative to a total amount of the liquid composition.

The unit "ppm" is "mass ppm."

When the amount is 1 ppm or greater and 50 ppm or less, suitable dispersibility of the active material in the organic solvent can be obtained, and both a high solid content and a low viscosity can be achieved. Although the mechanism of achieving the above-described effects with the above-mentioned range of the amount of the water is not clear, it is assumed that the state of surface of the active material is improved to be suitable for dispersion, as 1 ppm or greater of the water is present. On the other hand, it is also assumed that the adsorption of water onto the surface of the active material adversely influences a dispersing effect of the organic solvent, when the amount of the water is greater than 50 ppm.

The amount of the water can be measured at 25°C by coulometric Karl Fischer titration according to the moisture vaporization method. For example, the amount of the water can be measured by Karl Fischer moisture meter (CA-200, available from Nittoseiko Analytech Co., Ltd.).

<Active material>

The active material is not particularly limited, and may be appropriately selected according to the intended purpose. Examples of the active material include: oxides, such as alkali metal-containing transition metal oxides, alkali-containing transition metal phosphoric acid compounds, alkali-containing transition metal halogenated phosphoric acid compounds, and alkali-containing transition metal silicic acid compounds; sulfides, such as lithium sulfide, and sulfur-carbon composite positive electrodes; silicon (Si), silicon oxide (SiOx), silicon compounds, and alloy-based active materials, such as silicon-containing alloys. Among the above-listed examples, oxides and alloy-based active materials are preferred because an effect of dispersing the active material is further enhanced. The above-listed examples may be used alone or in combination.

[Positive electrode active material]

The positive electrode active material serving as the active material is not particularly limited, except that the positive electrode active material is capable of inserting or releasing alkali metal ions. The positive electrode active material may be appropriately selected according to the intended purpose. For example, an alkali metal-containing transition metal compound can be used as the positive electrode active material.

The alkali metal-containing transition metal compound is not particularly limited, and may be appropriately

selected according to the intended purpose. Examples of the alkali metal-containing transition metal compound include lithium-containing transition metal compounds, such as composite oxides each including lithium and at least one element selected from the group consisting of cobalt, manganese, nickel, chromium, iron, and vanadium.

The lithium-containing transition metal compound is not particularly limited, and may be appropriately selected according to the intended purpose. Examples of the lithium-containing transition metal compound include positive electrode materials, such as lithium-containing cobalt oxide (LiCoOz), lithium manganese oxide ($LiMn_2O_4$), lithium-containing nickel oxide ($LiNiO_2$), lithium-containing Co-Ni-Mn composite oxide (Li(Co Mn Ni)Oz), lithium-containing Ni-Mn-Al composite oxide, lithium-containing Ni-Co-Al composite oxide, olivine-type lithium iron phosphate ($LiFePO_4$), olivine-type lithium manganese phosphate ($LiMnPO_4$), $Li_2MnO_3$-$LiNiO_2$-based solid solutions, lithium-rich spinel compounds represented by $Li_{1+x}Mn_{2-x}O_4$ (0<X<2), $Li[Ni_{0.17}Li_{0.2}Co_{0.07}Mn_{0.56}]O_2$, and $LiNi_{0.5}Mn_{1.5}O_4$.

[Negative electrode active material]

The negative electrode active material serving as the active material is not particularly limited, except that the negative electrode active material is capable of inserting and releasing alkali metal ions. The negative electrode active material may be appropriately selected according to the intended purpose. Examples of the negative electrode active material include negative electrode active materials, such as lithium titanate, titanium oxide, tin oxide, silicon (Si), silicon oxide (SiOx), silicon compounds, and silicon-containing alloys.

[Maximum particle diameter of active material]

The maximum particle diameter for the particles of the active material is not particularly limited, except that effects obtainable by the present disclosure are not adversely affected. The maximum particle diameter for the particles of the active material may be appropriately selected according to the intended purpose. The maximum particle diameter of the particles of the active material is preferably smaller than a nozzle diameter of an inkjet head. For improving an ink ejection behavior, the maximum particle diameter of the particles of the active material is preferably sufficiently smaller than a nozzle diameter of an inkjet head. Specifically, a ratio (the maximum particle diameter of the particles of the active material in the liquid composition/the nozzle diameter of the inkjet head) of the maximum particle diameter of the particles of the active material in the liquid composition to the nozzle diameter of the inkjet head is preferably 0.8 or less, more preferably 0.6 or less, and yet more preferably 0.5 or less. When the maximum particle diameter of the particles of the active material is within the above-mentioned ranges, ejection stability of the liquid composition is improved. For example, an inkjet evaluation tool (EV1000, available from Ricoh Company Limited) has a nozzle diameter of 40 $\mu$m. In this case, the maximum particle diameter of the particles of the active material in the liquid composition is preferably 32 $\mu$m or less, more preferably 24 $\mu$m or less, and yet more preferably 20 $\mu$m or less.

The maximum particle diameter is the maximum value of the particle diameter within the measured particle size distribution of the active material in the liquid composition.

In a similar manner to the above-described evaluation method for the dispersibility of the active material, the maximum particle diameter of the particles of the active material can be measured from a particle size distribution, for example, according to ISO 13320:2009.

[Mode diameter of active material]

The mode diameter of the particles of the active material (the mode of the diameters of the particles of the active material) is not particularly limited, except that effects obtainable by the present disclosure are not adversely affected. The mode diameter of the particles of the active material may be appropriately selected according to the intended purpose. The mode diameter of the active material is preferably 0.5 $\mu$m or greater and 10 $\mu$m or less, more preferably 3 $\mu$m or greater and 10 $\mu$m or less. When the mode diameter of the active material is 0.5 $\mu$m or greater and 10 $\mu$m or less, jet failures are unlikely to occur during ejection of the liquid composition performed according to a liquid jet method. The mode diameter is the local maximum of the measured particle size distribution of the active material in the liquid composition. In a similar manner to the above-described evaluation method for the dispersibility of the active material, the mode particle diameter of the active material can be measured from a particle size distribution, for example, according to ISO 13320:2009.

At least part of the surface of each of the particles of the active material is preferably coated with an ion-conductive oxide. By coating each of the particles of the active material with the ion-conductive oxide, ion conductivity of the surfaces of the particles of the active material can be improved while maintaining the effects obtainable by the present disclosure.

The ion-conductive oxide coating the surface of each of the particles of the active material is preferably an ion-conductive lithium oxide. Examples of the ion-conductive lithium oxide include oxides represented by the general formula:

$Li_xAO_y$ (A is B, C, Al, Si, P, S, Ti, Zr, Nb, Mo, Ta, Sc, V, Y, Ca, Sr, Ba, Hf, Ta, Cr or W, and x and y are each a positive number).

Specific examples of the ion-conductive lithium oxide include $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{12}$, $Li_2Ti_2O_5$, $Li_2ZrO_3$, $LiNbO_3$, $LiTaO_3$, $Li_2MoO_4$, and $Li_2WO_4$. Among the above-listed examples, $Li_4Ti_5O_{12}$, $Li_2ZrO_3$, and LiNbOs are preferred.

Moreover, the ion-conductive lithium oxide may be composite oxide.

As the composite oxide, an arbitrary combination of the above-listed ion-conductive lithium oxides may be used. Examples of the composite oxide include $Li_4SiO_4$-$Li_3BO_3$ and $Li_4SiO_4$-$Li_3PO_4$.

An average thickness of the ion-conductive oxide coating the surface of each of the particles of the active material is preferably 0.1 nm or greater, more preferably 1 nm or greater. The average thickness of the ion-conductive oxide is preferably 100 nm or less, more preferably 20 nm or less, and yet more preferably 10 nm or less.

The average thickness of the ion-conductive oxide is an average thickness of the coating of the ion-conductive oxide in the region of each particle of the active material that is coated with the ion-conductive oxide. For example, the average thickness of the ion-conductive oxide can be measured by measuring a thickness of the ion-conductive oxide at randomly selected 3 or more points by a transmission electron microscope (TEM), etc., and calculating an average of the measured values.

The surfaces of the particles of the active material are each preferably coated with the film of the ion-conductive oxide having a uniform thickness. However, the film of the ion-conductive oxide having an uneven thickness is also acceptable.

Moreover, the coating of the ion-conductive oxide is not particularly limited, except that at least part of a surface of each particle of the active material is coated with the ion-conductive oxide. The coverage rate of the particles of the active material with the ion-conductive oxide is not particularly limited, and may be appropriately selected according to the intended purpose. The coverage rate is preferably 50% or greater, more preferably 75% or greater, and yet more preferably 90% or greater, relative to the surface of each of the particles of the active material.

A method for producing particles of the active material, surfaces of which are coated with the ion-conductive oxide, is not particularly limited, and may be appropriately selected from methods available in the related art. Examples of the method include a method where a solution of a precursor of the ion-conductive oxide is prepared by a sol-gel method, followed by applying the precursor to the active material. Examples of a method for applying the precursor to the active material include: a method where particles of the active material are dipped in the solution of the precursor; and a method where the solution of the precursor is applied to particles of the active material by spray coating.

The active material produced by the sol-gel method is preferably fired to transform the precursor into the ion-conductive oxide. The firing temperature for transforming the precursor to the ion-conductive oxide is preferably 200°C or higher, more preferably 300°C or higher, and yet more preferably 350°C or higher. In order to avoid a reduction in ion conductivity caused by a change in crystallinity, the firing temperature is preferably 450°C or lower, more preferably 400°C or lower.

<Conductive agent>

The liquid composition of the present disclosure preferably includes a conductive agent. When the liquid composition includes the conductive agent, conductivity of a resulting electrode composite material layer can be improved.

As the conductive agent, for example, a carbon-based material may be used. Examples of the carbon-based material include: carbon black produced by a furnace method, an acetylene method, or a gasification method; carbon nanofibers; carbon nanotubes; graphene; and graphite particles. As the conductive agent other than the carbon-based material, for example, particles or fibers of a metal (e.g., aluminum) may be used.

Among the above-listed examples, a carbon-based material having a small specific gravity is preferred in view of a reduction in weight of a resulting electrode composite material layer.

A mass ratio of the conductive agent relative to the active material is preferably less than 10 parts by mass, more preferably 5 parts by mass or less, yet more preferably 3 parts by mass or less, relative to 100 parts by mass of the active material. Moreover, the mass ratio is preferably 1 part by mass or greater. When the mass ratio of the conductive agent to a total amount of the active material is 1 part by mass or greater, conductivity of a resulting electrode composite material layer is further improved. When the mass ratio of the conductive agent to the total amount of the active material is less than 10 parts by mass, energy density of a resulting electrode composite material layer can be improved further without impairing conductivity of the electrode composite material layer.

<<Carbon-based material>>

The carbon-based material includes: amorphous carbon materials, such as carbon black; carbon fibers, such as graphite, graphene, carbon nanotubes, and VGCF; single or composite materials each having a graphene structure, such as nanodiamonds.

Among the above-listed examples, the carbon black is preferred in the following reason. Small particles of the carbon black are aggregated to form a large network per weight, thus the carbon black has been widely used as a conductive material for electrochemical elements, such as lithium ion batteries.

Examples of the carbon black include channel black, roller black, disk black, furnace black, thermal black, and acetylene black. Among the above-listed examples, furnace black or acetylene black is preferred because of desirable secondary battery characteristics. Among the furnace black, Ketjen Black is more preferred because Ketjen Black has a particularly large specific surface area.

In the embodiment where the liquid composition includes a carbon-based material as the conductive agent, the liquid composition preferably includes dispersed elements of the carbon-based material, where each dispersed element includes the carbon-based material. The liquid composition more preferably includes a composite of the carbon-based material and an ionic resin (may be also referred to as a "carbon-based material-resin composite").

The ionic resin is a resin including at least one basic functional group or basic functional group neutralized with an acidic compound in each molecule of the resin. The ionic resin is the equivalent to an ionic polymer dispersing agent described as the below-described dispersing agent.

As described in the below-described method for producing a liquid composition, the carbon-based material-resin composite is suitably prepared by a dispersing process. Specifically, the dispersing process includes mixing and dispersing the carbon-based material and the ionic resin in the organic solvent to disperse the carbon-based material.

To avoid impaired battery characteristics due to the ionic resin serving as the dispersing agent, the amount of the ionic resin is preferably 30% by mass or less, more preferably 20% by mass or less, yet more preferably 15% by mass or less, and particularly preferably 10% by mass or less, relative to the carbon-based material.

-Surface-modified carbon-based material-

The carbon-based material is preferably a surface-modified carbon-based material that is modified with a polar functional group. In other words, the carbon-based material is preferably a surface-modified carbon-based material in which a carbon material includes a polar functional group at a surface of the carbon material.

The carbon-based material is preferably a surface-modified carbon-based material including, at a surface of the carbon-based material, an acidic functional group or an acidic functional group neutralized with a basic compound, or both.

Moreover, the surface-modified carbon-based material preferably forms a composite (carbon-based material-resin composite) with the ionic resin including one or more groups of a basic functional group or a basic functional group neutralized with an acidic compound, or both, in each molecule of the ionic resin. Use of the composite material can reduce an amount of the ionic resin detached from the carbon-based material, while maintaining dispersibility of the carbon-based material. When the composite material is mixed with the active material, therefore, a smaller amount of the detached and free ionic resin is adsorbed onto the surfaces of the active material particles so that surface functions of the active material particles are assured without being impaired.

Compared to the case where the acid-base relationship between the surface modification of the carbon-based material and the ionic resin is opposite, moreover, the above-described combination of the carbon-based material and the ionic resin has high affinity to the organic solvent represented by General Formula (A) (e.g., a carboxylic acid ester that is acidic) as the ionic resin has a basic molecular structure. Even if the ionic resin is detached from the carbon-based material, solvation occurs between the organic solvent and the ionic resin so that adsorption of the ionic resin on the surface of the active material is minimized.

The term "surface modification" means a structure where a substituent is bonded to a graphene structure with a covalent bond within the carbon-based material that is a base of the structure. There are various methods of bonding a substituent to a surface of the carbon-based material with a covalent bond. A widely used method is a method where a substituent is radicalized to covalently bond the substituent to graphene edges (see WO 1996/018688, and JP-A Nos. 2016-27092 and 2016-27093).

The acidic functional group is not particularly limited, and may be appropriately selected according to the intended purpose. Examples of the acidic functional group include a sulfonic acid group, a sulfamide group, a phosphonic acid group, and a carboxylic acid group.

The countercation for the acidic functional group or an acidic functional group neutralized with a basic compound, or both in the surface-modified carbon-based material is preferably other than a proton in view of corrosion resistance, more preferably an alkali metal salt in view of a function as an ion conduction carrier for the active material, and yet more preferably a lithium salt having a small ion radius in view of high mobility.

As a preferred embodiment of the surface-modified carbon-based material, the carbon-based material is preferably a surface-modified carbon-based material in which a substituent represented by General Formula (1) below is added to a carbon material.

<Substituent represented by General Formula (1)>

The substituent is a substituent represented by General Formula (1) below. Since the surface-modified carbon-based material includes the substituent represented by General Formula (1), dispersibility of the surface-modified carbon-based material is improved even in an organic solvent having a low dielectric constant.

The substituent is preferably a cationic functional group.

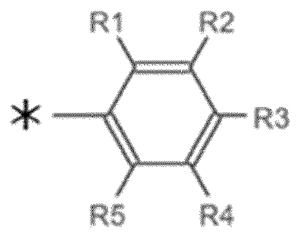

General Formula (1)

In General Formula (1), R1, R2, R3, R4 and R5 are each a hydrogen atom or a group represented by General Formula (2), wherein at least one of R1, R2, R3, R4, and R5 is a group represented by General Formula (2), and * is a bonding site with the carbon material.

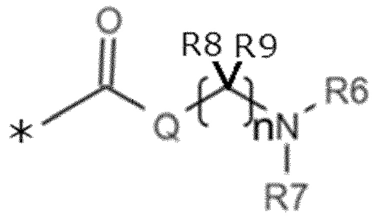

General Formula (2)

In General Formula (2), Q is an oxygen atom or NH, R6 and R7 are each a methyl group, an ethyl group, a n-propyl group, or an iso-isopropyl group, R8 and R9 are each a hydrogen atom or a methyl group, n is an integer of 2 or 3, and * is a bonding site with the substituent represented by General Formula (1).

In General formula (1), R1, R2, R3, R4, and R5 are each a hydrogen atom or a group represented by General Formula (2). At least one of R1, R2, R3, R4, and R5 is a group represented by General Formula (2).

In General Formula (2), Q is an oxygen atom or NH.

In General Formula (2), R6 and R7 are each a methyl group, an ethyl group, a n-propyl group, or an iso-propyl group. Among the above-listed examples, a methyl group and an ethyl group are preferred.

In General Formula (2), R8 and R9 are each a hydrogen atom or a methyl group.

In General Formula (2), n is an integer of 2 or 3.

--Carbon material--

The carbon material is not particularly limited, and may be appropriately selected according to the intended purpose. Examples of the carbon material include: amorphous carbon materials, such as carbon black; carbon fibers, such as graphite, graphene, carbon nanotubes, and VGCF; and single materials or composite materials each having a graphene structure, such as nanodiamonds. The above-listed examples may be used alone or in combination. Among the above-listed examples, carbon black is preferred because small particles of the carbon black are aggregated to form a large network structure per weight, and the carbon black can be widely used as a conductive material for electrochemical elements, such as lithium ion battery cells.

The carbon black is not particularly limited, and may be appropriately selected according to the intended purpose. Examples of the carbon black include channel black, roller black, disk black, furnace black, thermal black, acetylene black, and the like. Among the above-listed examples, furnace black and acetylene black are more preferred as excellent secondary battery characteristics are imparted.

The furnace black is not particularly limited, and may be appropriately selected according to the intended purpose. The furnace black is preferably ketjen black because ketjen has a large surface area.

The form of the carbon material is not particularly limited, and may be appropriately selected according to the intended purpose. Examples of the form of the carbon material include spheres, needles, fibers, filaments, and spikes.

When the form of the carbon material is spheres (spherical particles), primary particle diameters of the spheres are not particularly limited, and may be appropriately selected according to the intended purpose. The primary particle diameters of the spheres are preferably 50 nm or less, more preferably 30 nm or less, and particularly preferably 1 nm or greater and 30 nm or less. When the primary particles are 50 nm or less, a liquid composition having excellent storage stability can be obtained.

A method for measuring the primary particle diameters is not particularly limited, and may be appropriately selected according to the intended purpose. For example, the primary particle diameters can be measured by dynamic light scattering. Examples of the measurement method using the dynamic light scattering include a method where an autocorrelation coefficient determined by photo correlation spectroscopy is analyzed by the Marquardt method to obtain a curve, and the primary particles are determined from the obtained curve.

The BET value (may be referred to as the "BET specific surface area" hereinafter) of the carbon material is not particularly limited, and may be appropriately selected according to the intended purpose. The BET value of the carbon material is preferably 50 $m^2/g$ or greater and 1,500 $m^2/g$ or less, more preferably 100 $m^2/g$ or greater and 1,000 $m^2/g$ or less. When the BET value is 50 $m^2/g$ or greater and 1,500 $m^2/g$ or less, a liquid composition having excellent storage stability can be obtained.

A method for measuring the BET value is not particularly limited, except that the method is according to ISO 9277:2010. The method may be appropriately selected according to the intended purpose. For example, the BET value can be measured by BELSORPminiII (available from BEL JAPAN, INC.). In the case where the carbon material is a known material, the BET value can be determined from a database, such as NIMS Materials Database (MatNavi) or Chemical Substances Database (National Institute for Environmental Studies). In the case where the carbon material is not a known material, the BET value can be measured by a pycnometer, etc.

A method for determining a structure in the surface-modified carbon-based material, in which the substituent is added to the carbon material, is not particularly limited, and may be appropriately selected according to the intended purpose. Examples of the method include: a method using electron spectroscopy (X-ray absorption near-edge structure spectroscopy: XANES); a method for determining the structure from the behavior of protons or carbons by solid NMR; and a method for determining the structure from the behavior of radicals by ESR.

As the method using the electron spectroscopy, specifically, a spectrum of a sample coated on a glass substrate is measured by an X-ray photoelectron spectrometer (XPS)(LJPS-9030, available from JASCO Corporation) to determine the structure of the surface-modified carbon-based material.

As the method for determining the structure from the behavior of protons or carbons by solid NMR, specifically, a sample is measured as a powder by a nuclear magnetic resonance spectrometer (JNM-ECA700, available from JEOL Ltd.) at room temperature (25°C) to determine proton peaks or carbon peaks so that the structure of the substituent is determined and the structure of the surface-modified carbon-based material is determined.

(Method for producing surface-modified carbon-based material)

The method for producing the surface-modified carbon-based material includes reacting a radical compound represented by General Formula (3) with a surface of a carbon material to bond a functional group represented by General Formula (1) to the surface of the carbon material. The method may further include other steps, as necessary.

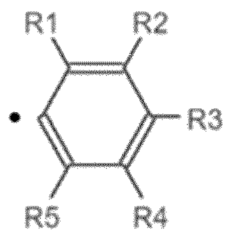

General Formula (3)

In General Formula (3), R1, R2, R3, R4, and R5 are each a hydrogen atom or a group represented by General Formula (2), wherein at least one of R2, R3, R4, and R5 is a group represented by General Formula (2), and • is a radical.

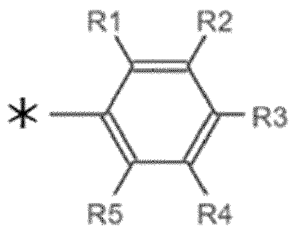

General Formula (1)

In General Formula (1), R1, R2, R3, R4, and R5 are each a hydrogen atom or a group represented by General Formula (2), wherein at least one of R1, R2, R3, R4, and R5 is a group represented by General Formula (2), and * is a bonding site with the carbon material.

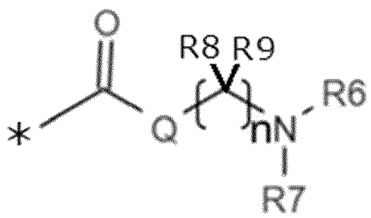

General Formula (2)

In General Formula (2), Q is an oxygen atom or NH, R6 and R7 are each a methyl group, an ethyl group, a n-propyl group, or an isopropyl group, R8 and R9 are each a hydrogen atom or a methyl group, n is an integer of 2 or 3, and * is a bonding site with the substituent represented by General Formula (1).

A method for bonding (covalent bonding) the modifier with the surface of the carbon material is not particularly limited, and may be appropriately selected according to the intended purpose. Examples of the method include methods known in the related art. Among the above-listed examples, preferred is a method where a radical compound represented by General Formula (3), which is a radicalized substituent represented by General Formula (1), is bonded to a graphene edge of the carbon material via covalent bonding.

A method for bonding the radical compound in which the substituent represented by General Formula (1) is radicalized, to a graphene edge of the carbon material via covalent bonding is not particularly limited, and may be appropriately selected according to the intended purpose. Examples of the method include methods disclosed in WO 96/18688, and JP-A Nos. 2016-27092 and 2016-27093.

As the above-mentioned method, preferred is a method where an aniline compound (may be referred to as a "modifier" hereinafter) is used as a starting material to form a diazonium salt where an amino group of the aniline compound is diazotized and the diazonium salt is used for surface modification because a high surface modification rate is achieved, and a surface-modified carbon-based material that does not impair intrinsic properties of the carbon material can be obtained.

Specifically, the diazonium salt represented by General Formula (4) is preferably generated from the radical compound represented by General Formula (3).

<Diazonium salt represented by General Formula (4)>

The diazonium salt is a diazonium salt represented by General Formula (4) below.

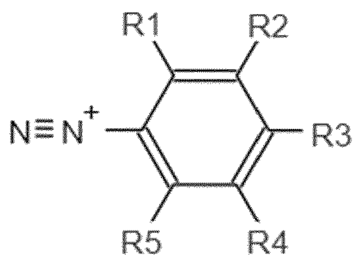

General Formula (4)

In General Formula (4), R1, R2, R3, R4, and R5 are each a hydrogen atom or a group represented by General Formula

(2), wherein at least one of R1, R2, R3, R4, and R5 is a group represented by General Formula (2).

The aniline compound (may be referred to as a "modifier" hereinafter) may be appropriately synthesized for use, or a commercial product may be used.

The commercial product is not particularly limited, and may be appropriately selected according to the intended purpose. Examples of the commercial product include 3-Amino-N-[2-(diethylamino)ethyl]benzamide (the compound represented by Structural Formula (1), available from Sigma-Aldrich), procainamide hydrochloride (the compound represented by Structural Formula (2), available from Sigma-Aldrich), 4-Amino-N-[3-(diethylamino)propyl]benzamide (the compound represented by Structural Formula (3), available from Sigma-Aldrich), 4-Amino-N-[2-(dimethylamino)ethyl]benzamide (the compound represented by Structural formula (4), available from Sigma-Aldrich), 3-Amino-N-[2-(dimethylamino)ethyl]benzamide, hydrochloride (the compound represented by Structural Formula (5), available from Sigma-Aldrich), Dimethocaine (the compound represented by Structural Formula (6), available from Tokyo Chemical Industry Co., Ltd.), 2-(diethylamino)ethyl 3-aminobenzoate (the compound represented by Structural Formula (7), available from Tokyo Chemical Industry Co., Ltd.), and Procaine (the compound represented by Structural Formula (8), available from Tokyo Chemical Industry Co., Ltd.).

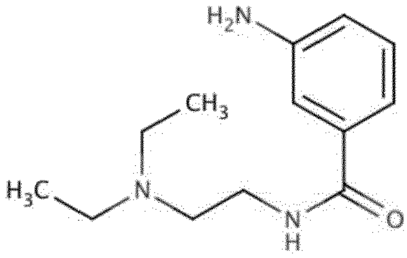

Structural Formula (1)

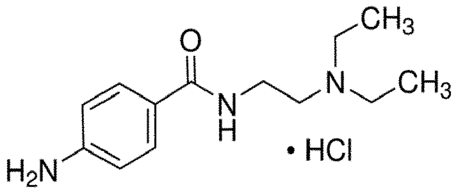

Structural Formula (2)

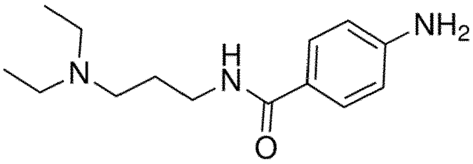

Structural Formula (3)

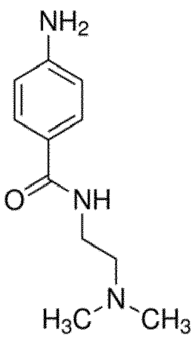

Structural Formula (4)

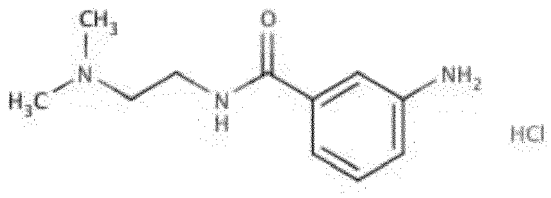

Structural Formula (5)

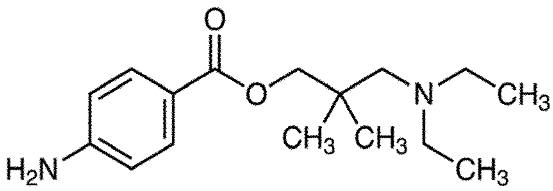

Structural Formula (6)

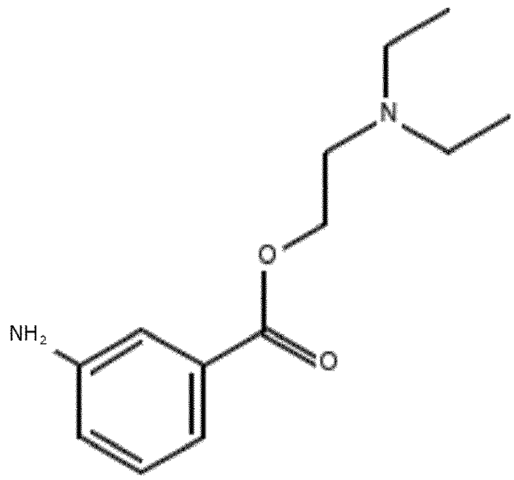

Structural Formula (7)

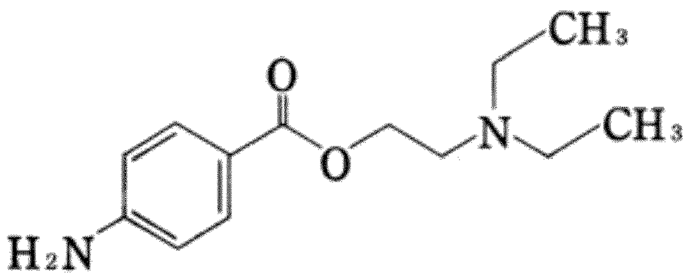

Structural Formula (8)

<Other components>

Other components are not particularly limited, except that effects obtainable by the present disclosure are not adversely affected. The above-mentioned other components may be appropriately selected according to the intended purpose. Examples of the above-mentioned other components include a solid electrolyte, a dispersing agent, and a binder.

<<Solid electrolyte>>

The solid electrolyte is not particularly limited, except that the solid electrolyte has an electron insulation property and ion conductivity, and the solid electrolyte does not react with the organic solvent. The solid electrolyte may be appropriately selected according to the intended purpose. Examples of the solid electrolyte include oxide-based solid electrolytes and sulfide-based solid electrolytes.

Among the above-listed examples, a sulfide solid electrolyte is preferred because excellent interfaces are

formed between particles of the solid electrolyte or between the solid electrolyte and the active material. A crystal-based Argyrodite sulfide solid electrolyte is more preferred because the crystal-based Argyrodite sulfide solid electrolyte is particularly compatible with the dispersibility of the present disclosure, and achieves an excellent dispersing behavior similar to the active material.

Examples of the oxide-based solid electrolyte include compounds each including an oxygen atom (O), exhibiting ion conductivity of a metal belonging to Group 1 or Group 2 of the periodic table, and having an electron insulation property.

Having the electron insulation property means a state where short-circuiting does not occur when a positive electrode and a negative electrode are arranged to face each other with a layer of the solid electrolyte (solid electrolyte layer) placed between the positive electrode and the negative electrode. Exhibiting ion conductivity means that only ions are moved when a potential difference is applied in a state where a positive electrode and a negative electrode are arranged to face each other with the solid electrolyte layer placed between the positive electrode and the negative electrode.

Examples of the specific compound of the oxide-based solid electrolyte include $Li_{xa}La_{ya}TiO_3$ [xa = 0.3 to 0.7, ya = 0.3 to 0.7] (LLT), $Li_{xb}La_{yb}Zr_{zb}Mbb_{mb}O_{nb}$ (Mbb is at least one element selected from the group consisting of Al, Mg, Ca, Sr, V, Nb, Ta, Ti, Ge, In, and Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$), $Li_{xc}B_{yc}Mcc_{zc}O_{nc}$ (Mcc is at least one element selected from the group consisting of C, S, Al, Si, Ga, Ge, In, and Sn, xc satisfies $0 \leq xc \leq 5$, yc satisfies $0 \leq yc \leq 1$, zc satisfies $0 \leq zc \leq 1$, and nc satisfies $0 \leq nc \leq 6$), $Li_{xd}(Al,Ga)_{yd}(Ti,Ge)_{zd}Si_{ad}P_{md}O_{nd}$ (provided that, $1 \leq xd \leq 3$, $0 \leq yd \leq 1$, $0 \leq zd \leq 2$, $0 \leq ad \leq 1$, $1 \leq md \leq 7$, $3 \leq nd \leq 13$), $Li(_{3-2xe})Mee_{xe}DeeO$ (xe is a number of 0 or greater and 0.1 or less, Mee is a divalent metal atom, and Dee is a halogen atom or a combination of two or more halogen atoms), $Li_{xf}Si_{yf}O_{zf}$ ($1 \leq xf \leq 5$, $0 < yf \leq 3$, $1 \leq zf \leq 10$), $Li_{xg}S_{yg}O_{zg}$ ($1 \leq xg \leq 3$, $0 < yg \leq 2$, $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $LisPO_{(4-3/2w)}N_w$ (w satisfies $w < 1$), $Li_{3.5}Zn_{0.25}GeO_4$having a Lithium super ionic conductor (LISICON)-type crystal structure, $La_{0.55}Li_{0.35}TiO_3$ having a perovskite-type crystal structure, $LiTi_2P_3O_{12}$ having a sodium (Na) super ionic conductor (NASICON)-type crystal structure, $Li_{1+xh+yh}(Al,Ga)_{xh}(Ti,Ge)_{2-xh}Si_{yh}P_{3-yh}O_{12}$ (provided that, $0 \leq xh \leq 1$, $0 \leq yh \leq 1$), and $Li_7La_3Zr_20_{12}$ (LLZ) having a garnet-type crystal structure.

Moreover, a phosphorous compound including Li, P, and O is also preferred. Examples of the phosphorous compound include lithium phosphate ($Li_3PO_4$), LiPON where part of oxygens of lithium phosphate is substituted with nitrogen, and LiPOD1 (D1 is at least one selected from Ti, V, Cr, Mn, Fe, Co, Ni, Cu, Zr, Nb, Mo, Ru, Ag, Ta, W, Pt, Au, etc.).

Moreover, $LiA^1ON$ ($A^1$ is at least one selected from Si, B, Ge, Al, C, Ga, etc.) is also preferably used.

For example, the sulfide solid electrolyte is roughly classified into a crystal sulfide solid electrolyte and a glass sulfide solid electrolyte.

Examples of the crystal sulfide solid electrolyte include $Li_{9.54}Si_{1.74}P_{1.44}S_{11.7}Cl_{0.3}$, $Li_{9.6}P_3S_{12}$, $Li_9P_3S_9O_3$, $Li_{9.81}Sn_{0.81}P_{2.19}S_{12}$, $Li_{9.42}Si_{1.02}P_{2.1}S_{9.96}O_{2.04}$, $Li_{1o}Ge(P_{1-x}Sb_x)\ _2S_{12}$ ($0 \leq x \leq 0.15$), $Li_{10}SnP_2S_{12}$, $Li_{10.35}[M1_{1-x}M2_x]_{1.35}P_{1.65}S_{12}$(M1 and M2 are each Si, Ge, Sn, As, or Sb, $0 \leq x \leq 0.15$), $Li_{11}Si_2PS_{12}$, $Li_{11}AlP_2S_{12}$, $Li_{3.45}Si_{0.45}P_{0.55}S_4$, $Li_6PS_5X$ (X is Cl, Br, or I), $Li_5PS_4X_2$ (X is Cl, Br, or I), $Li_{5.5}PS_{4.5}Cl_{1.5}$, $Li_{5.35}Ca_{0.1}PS_{4.5}Cl_{1.55}$, $Li_{6+x}M_xSb_{1-x}S_5I$ (M is Si, Ge, or Sn, $0 \leq x \leq 1$), $Li_7P_2S_BI$, $\gamma$-$Li_3PS_4$, $Li_4MS_4$ (M is Ge, Sn, or As), $Li_{4-x}Sn_{1-x}Sb_xS_4$ ($0 \leq x \leq 0.15$), $Li_{4-x}Ge_{1-x}P_xS_4$ ($0 \leq x \leq 0.15$), and $Li_{3+5x}P_{1-x}S_4$ ($0 \leq x \leq 0.\ 3$) .

Examples of the glass sulfide solid electrolyte include $Li_2S$-$P_2S_5$, $Li_2S$-$P_2S_5$-LiI, $Li_2S$-$P_2S_5$-$P_2O_5$, $Li_2S$-$P_2S_5$-LiCl, $Li_2S$-$SiS_2$, $Li_2S$-$SiS_2$-$P_2S_5$, $Li_2S$-$SiS_2$-$Al_2S_3$, and $Li_2S$-$SiS_2$-$Li_xMO_y$ (M is Si, P, or Ge). Moreover, a $Li_7P_3S_{11}$ glass ceramic, in which part of the glass sulfide solid electrolyte is crystallized, may be also used. A blending ratio of elements constituting the glass sulfide solid electrolyte is not limited.

<<Dispersing agent»

The liquid composition of the present disclosure can achieve desirable dispersibility of the active material without a dispersing agent. The liquid composition may optionally include a dispersing agent for further improving dispersion stability of the active material, or improving dispersibility of components other than the active material.

The dispersing agent is not particularly limited. In view of dispersibility, the dispersing agent is preferably a dispersing agent including an ionic adsorption group. As the dispersing agent, dispersing agents available in the related art or commercially available dispersing agents may be appropriately used. Examples of the dispersing agent include: polymer dispersing agents, such as polyethylene-based dispersing agents, polyethylene oxide-based dispersing agents, polypropylene oxide-based dispersing agents, polycarboxylic acid-based dispersing agents, naphthalene sulfonic acid formalin condensate-based dispersing agents, polyethylene glycol-based dispersing agents, partial alkyl ester of polycarboxylic acid-based dispersing agents, polyether-based dispersing agents, and polyalkylene polyamine-based dispersing agents; low-molecular-weight dispersing agents, such as alkyl sulfonate-based dispersing agents, quaternary ammonium-based higher alcohol alkylene oxide-based dispersing agents, multivalent alcohol ester-based dispersing agent, and alkyl polyamine-based dispersing agents; and inorganic dispersing agents, such as polyphosphate dispersing agents.

<<Binder>>

The liquid composition of the present disclosure may include a binder. The binder is not particularly limited, except that the binder is configured to bind non-volatile components together. The binder may be dispersed or dissolved in the organic solvent.

A mass ratio of the binder to the active material is not particularly limited, and may be appropriately selected according to the intended purpose. For example, the mass ratio of the binder to the active material is from 0.1 parts by mass to 10 parts by mass, relative to 100 parts by mass of the active material. For achieving desirable binding properties of an electrode composite material layer, as well as both electroconductivity and ion conductivity, the mass ratio of the binder resin is preferably 1 part by mass or greater and 5 parts by mass or less, more preferably 2 parts by mass or greater and 3 parts by mass or less.

The binder may include arbitrary components. For example, the binder may include at least one selected from the group consisting of polyvinylidene fluoride (PVDF), a vinylidene fluoride-hexafluoropropylene copolymer (PVDF-HFP), polytetrafluoroethylene (PTFE), styrene butadiene rubber (SBR), and a polyacrylic resin.

In the case where the liquid composition is ejected by inkjet, a polyacrylic resin is preferably used as the binder to minimize clogging of nozzles of a liquid jet head. The polyacrylic resin is dissolved in the organic solvent, but the polyacrylic resin does not increase viscosity of a resulting liquid composition. Moreover, a polyacrylic resin having a glass transition temperature of 80°C or lower (e.g., polybutyl methacrylate (PBMA)) is preferred because a resulting liquid composition can form a composite material layer having excellent binding properties.

[Method for producing liquid composition]

The liquid composition can be produced by dissolving or dispersing the above-described components in the organic solvent.

Specifically, the above-described components and the organic solvent are mixed using a mixer (e.g., a ball mill, a sand mill, a bead mill, a pigment disperser, a motor machine, an ultrasonic disperser, a homogenizer, a planetary mixer, and FILMIX) to prepare a liquid composition.

(Method for producing liquid composition)

In the embodiment where the liquid composition includes a carbon-based material as the conductive agent, the method for producing the liquid composition of the present disclosure includes a carbon-based material dispersion preparation step and a liquid composition preparation step. The carbon-based material dispersion preparation step includes preparing a carbon-based material dispersion liquid including the carbon-based material. The liquid composition preparation step includes mixing the active material with the carbon-based material dispersion liquid to prepare a liquid composition.

Since the carbon-based material dispersion liquid, in which the carbon-based material is dispersed, is prepared in advance, followed by mixing with the active material, even if other components (e.g., the ionic resin) are added during dispersing the carbon-based material, adsorption of the components onto the surface of the active material is minimized to protect the surface functions of the active material without being impaired.

A solvent used for the carbon-based material dispersion liquid is not particularly limited, except that effects obtainable by the present disclosure are not adversely affected. To avoid aggregation during mixing with the active material dispersion liquid, the solvent is preferably an organic solvent represented by General Formula (1).

When the solvent is the organic solvent represented by General Formula (1), the active material particles may be directly mixed with the carbon-based material dispersion liquid. When the solvent is an organic solvent other than the organic solvent represented by General Formula (1), the organic solvent represented by General Formula (1) is separately added and mixed at a ratio by which the effects obtainable by the present disclosure are achieved. For example, the active material is dispersed in the organic solvent represented by General Formula (1) in advance, then the resulting dispersion liquid of the active material may be mixed with the carbon-based material dispersion liquid including the organic solvent that is an organic solvent other than the organic solvent represented by General Formula (1).

<<Carbon-based material dispersion preparation step>>

The carbon-based material dispersion preparation step includes at least dispersing, and preferably further includes refining.

The dispersing is a process including mixing and dispersing the carbon-based material and the ionic resin in a solvent to disperse the carbon-based material. As the dispersing is performed, the carbon-based dispersion liquid including the carbon-based material can be prepared.

A method of the mixing and dispersing is not particularly limited, and may be appropriately selected according to the intended purpose. Examples of the method include a method of mixing and dispersing the carbon-based material using a mixer, such as a ball mill, a sand mill, a bead mill, a pigment disperser, a motor machine, an ultrasonic disperser, a homogenizer, a planetary mixer, and FILMIX.
The refining is a process that follows the dispersing and removes the ionic resin dissolved in the solvent. As the refining is performed, the ionic resin that is free in the solvent without forming a composite of the carbon-based material and the ionic resin (carbon-based material-resin composite) can be removed, and in the following liquid composition preparation step, adsorption of the ionic resin onto the surface of the active material can be further minimized to protect the surface functions of the active material particles without being impaired.
Use of the liquid composition is not particularly limited, and may be appropriately selected according to the intended purpose. For example, the liquid composition is suitably used as a material for forming active material-containing layers (e.g., electrode composite material layers and solid electrolyte layers) in electrochemical elements.
Moreover, the liquid composition is suitably used as a liquid composition for inkjet.

(Storage container)

The storage container of the present disclosure includes a container and the above-described liquid composition of the present disclosure. The liquid composition is stored in the container.
A shape, structure, and size of the container are not particularly limited, and may be appropriately selected according to the intended purpose. Examples of the container include glass bottles, plastic containers, plastic bottles, stainless steel bottles, 18L square cans, and drum cans.

(Electrode)

The electrode of the present disclosure includes an electrode substrate and an electrode composite material layer disposed on the electrode substrate. The electrode composite material layer includes an active material. An amount of a dispersing agent in the electrode composite material layer is 0% by mass or greater and 1% by mass or less.
The electrode composite material layer is formed using the above-described liquid composition of the present disclosure.

<electrode substrate (current collector)>

A material constituting the electrode substrate is not particularly limited, except that the material has conductivity and is stable against applied electric potential.
As the liquid composition is applied to the electrode substrate, and optionally followed by heating, an electrode including the electrode substrate and the electrode composite material is prepared.

<Electrode composite material layer>

The electrode composite material layer includes an active material, and may further include an organic solvent, a dispersing agent, and other components, as necessary.
The active material, organic solvent, dispersing agent, and other components are the same as the active material, organic solvent, dispersing agent, and other components described in association with the above-described liquid composition of the present disclosure. The active material, organic solvent, dispersing agent, and other components may be each appropriately selected.
An amount of the dispersing agent is 0% by mass or greater and 5.0% by mass or less, preferably 0% by mass or greater and 3.0% by mass or less, more preferably 0% by mass or greater and 1.0% by mass or less, and yet more preferably 0% by mass, relative to a total amount of the electrode composite material layer.
The organic solvent is the same as the organic solvent described in association with the above-described liquid composition of the present disclosure. Specifically, the organic solvent is the organic solvent represented by General Formula (1). In General Formula (1), $R^1$ and $R^2$ are each independently a straight-chain alkyl group or a branched-chain alkyl group.
In the case where the electrode composite layer further includes an organic solvent, an amount of the organic solvent is not particularly limited, except that the amount of the organic solvent is from 1 ppm to 1,000 ppm relative to a total amount of the electrode composite material layer. The amount of the organic solvent may be appropriately selected according to the intended purpose.
A method for measuring the amounts of the organic solvent and dispersing agent in the electrode composite material layer is not particularly limited, and may be appropriately selected according to the intended purpose. For

example, the amount of the organic solvent and the amount of the dispersing agent may be determined in the following manner.

The electrode composite material layer is cut out into a square piece having a side of 20 mm, and the obtained cut piece is immersed in deuterated tetrahydrofuran contained in a glass bottle to yield an eluate. The obtained elaute is filtered with a syringe filter and a quantitative analysis is performed by $^1$H-NMR. The correlation between the $^1$H-NMR peak area and the amount of the organic solvent or dispersing agent is determined by preparing a calibration curve.

[Negative electrode]

Fig. 1 illustrates an example of the negative electrode of the present embodiment.

The negative electrode 101 includes a negative electrode substrate 111 and a negative electrode composite material layer 121 formed on one face of the negative electrode substrate 111. A shape of the negative electrode 101 is not particularly limited. Examples of the shape of the negative electrode 101 include a flat plate shape. Examples of a material constituting the negative electrode substrate 111 include stainless steel, nickel, aluminum, and copper.

The negative electrode composite material layer 121 may be formed on the both faces of the negative electrode substrate 111.

The negative electrode can be produced by the below-described electrode production apparatus.

[Positive electrode]

Fig. 2 illustrates an example of the positive electrode of the present embodiment.

The positive electrode 20 includes a positive electrode substrate 21 and a positive electrode composite material layer 22 formed on one face of the positive electrode substrate 21. A shape of the positive electrode 20 is not particularly limited. Examples of the shape of the positive electrode 20 include a flat plate shape. Examples of a material constituting the positive electrode substrate 21 include stainless steel, aluminum, titanium, and tantalum.

The positive-electrode-composite-material layer 22 may be formed on both faces of the positive electrode substrate 21.

The positive electrode can be produced by the below-described electrode production apparatus.

(Electrode production apparatus and method for producing electrode)

The electrode production apparatus of the present disclosure includes the above-described storage container of the present disclosure and an applicator. The applicator is configured to apply the above-described liquid composition of the present disclosure stored in the storage container to an electrode substrate. The electrode production apparatus may further include other units, as necessary.

The method for producing the electrode according to the present disclosure includes an applying step that includes applying the above-described liquid composition of the present disclosure. The method for producing the electrode may further include other steps, as necessary.

<Applicator and applying step>

The applicator is a unit configured to apply the liquid composition, which is stored in the storage container, onto an electrode substrate.

The applying step is a step including applying the liquid composition onto an electrode substrate. The applying step is suitably performed by the applicator.

As the applying is carried out, the liquid composition is applied onto the electrode substrate to form a liquid composition layer, forming an electrode composite material layer.

A method for applying the liquid composition is not particularly limited. Examples of the method include liquid jet methods (e.g., inkjet coating, spray coating, and dispenser coating), spin coating, casting, microgravure coating, gravure coating, bar coating, roll coating, wire bar coating, dip coating, slit coating, capillary coating, nozzle coating, gravure printing, screen printing, flexo printing, offset printing, and reverse printing. Among the above-listed examples, inkjet methods are particularly preferred. As an inkjet method is used, various shapes of electrodes can be produced in a non-contact manner. Therefore, a waste of the active material is reduced, as die cutting, which may generate a large waste of the active material, is not necessary in the production process of electrodes.

<Other units and other steps>

Other units of the electrode production apparatus are not particularly limited, except that the units do not

adversely affect the effects obtainable by the present disclosure. The above-mentioned other units may be appropriately selected according to the intended purpose. Examples of the above-mentioned other units include a heater.

Other steps of the method for producing the electrode are not particularly limited, except that the above-mentioned other steps do not adversely affect the effects obtainable by the present disclosure. The above-mentioned other steps may be appropriately selected according to the intended purpose, as necessary. Examples of the above-mentioned other steps include a heating step.

<<Heater and heating step>>

The heater is a unit configured to heat the liquid composition ejected by the ejecting unit.

The heating step is a step including heating the liquid composition ejected by the ejecting step.

As the heating is performed, the liquid composition layer can be dried.

The method for producing the electrode, particularly by the inkjet method, will be described hereinafter.

The electrode production apparatus of the present embodiment includes the above-described storage container of the present disclosure, and an ejecting unit configured to eject the liquid composition stored in the storage container using an inkjet head (may be also referred to as a "liquid jet head").

The electrode production apparatus may further include other units, as necessary.

The method for producing the electrode of the present embodiment includes an ejecting step that includes ejecting the liquid composition of the present disclosure using an inkjet head. The method for producing the electrode may further include other steps, as necessary.

An active material-containing layer formed with the liquid composition may be various layers depending on the active material used. For example, the active material-containing layer may be an electrode composite material layer.

<Ejecting unit and ejecting step>

The ejecting unit is one embodiment of the applicator. The ejecting unit is a unit configured to eject the liquid composition, which is stored in the storage container, onto an electrode substrate using an inkjet head.

The ejecting step is one embodiment of the applying step. The ejecting step is a step including ejecting the liquid composition using an inkjet head to apply the liquid composition onto an electrode substrate.

As the ejection is performed, the liquid composition is applied onto a target to form a liquid composition layer.

The target (may be referred to as an "ejection target" hereinafter) is not particularly limited, except that the target is a target on which an active material-containing layer is formed. The target may be appropriately selected according to the intended purpose. Examples of the target include an electrode substrate (may be also referred to as a "collector"), and an electrode composite material layer disposed on the electrode substrate.

[Embodiment of directly applying liquid composition to base to form electrode composite material layer or electrode]

Fig. 3 is a schematic view illustrating an example of the method for producing the electrode according to the present embodiment.

The liquid composition 12A is stored in a tank 307 of a liquid jet device 300. The liquid composition 12A is supplied from the tank 307 to a liquid jet head 306 via a tube 308. The number of the liquid jet devices disposed is not limited to one. Two or more liquid jet devices may be disposed.

For production of an electrode, an electrode substrate 11 is set on a stage 310, followed by ejecting droplets of the liquid composition 12A from the liquid jet head 306 to the electrode substrate 11. During the ejection of the liquid composition 12A, the stage 310 may be moved, or the liquid jet head 306 may be moved. The ejected liquid composition 12A will constitute an electrode composite material layer 12.

Moreover, the liquid jet device 300 may have a system for capping the nozzle to prevent drying of the nozzle when the liquid composition 12A is not ejected from the liquid jet head 306.

Fig. 4 is a schematic view illustrating an example of an electrode production apparatus for carrying out the method for producing the electrode according to the present embodiment.

The electrode production apparatus of Fig. 4 is an apparatus that is configured to produce an electrode composite material layer using the above-described liquid composition. The electrode production apparatus includes an ejecting unit 10 configured to apply a liquid composition onto a print base 4 (electrode substrate) having an ejection target to form a liquid composition layer, and a heater 30 configured to heat the liquid composition layer to form an electrode composite material layer. The electrode production apparatus also includes a transporting unit 5 configured to transport the print base 4. The transporting unit 5 is configured to transport the print base 4 to pass through the ejecting unit 10 and the heater 30 in the order as mentioned at the predetermined speed.

The ejecting unit 10 includes an arbitrary printing device 1a according to an inkjet printing method, a storage

container 1b, in which the liquid composition is stored, and a supply tube 1c configured to supply the liquid composition stored in the storage container 1b to the printing device 1a. The printing device 1a is an applicator that is configured to apply the liquid composition onto a print base 4 to carry out the applying step.

The storage container 1b stores the liquid composition 7. The ejecting unit 10 is configured to eject the liquid composition 7 from the printing device 1a to apply the liquid composition 7 onto the print base 4 to form a thin film of the liquid composition layer. The storage container 1b may be integrated with the electrode production apparatus, or may be detachable from the electrode production apparatus. Moreover, the storage container 1b may be a container for supplying the liquid composition to a storage container integrated with the electrode production apparatus or a storage container detachable from the electrode production apparatus.

The storage container 1b and supply tube 1c are appropriately selected, as long as the storage container 1b and supply tube 1c can stably store and supply the liquid composition 7 .

As illustrated in Fig. 4, the heater 30 includes a heating device 3a and is configured carry out a solvent removing step. The solvent removing step includes heating and drying the solvent remaining in the liquid composition layer using the heating device 3a to remove the solvent. As the heating and drying are performed, an electrode composite material layer is formed. The heater 30 may be configured to carry out the solvent removing step under the reduced pressure.

The heating device 3a is not particularly limited, and may be appropriately selected according to the intended purpose. Examples of the heating device 3a include a substrate heater, an IR heater, a hot air heater, and any combination of the foregoing heaters.

Moreover, the heating temperature and heating time can be appropriately selected according to a boiling point of the solvent included in the liquid composition 7 and the thickness of the formed film.

Fig. 5 is a schematic view illustrating another example of the electrode production apparatus (liquid jet device) for carrying out the method for producing the electrode according to the present embodiment.

The liquid jet device 300' is configured to control a pump 3101 and valves 311 and 312 to circulate the liquid composition through a liquid jet head 306, a tank 307, and a tube 308.

Moreover, the liquid jet device 300' includes an external tank 313. When the amount of the liquid composition in the tank 307 decreases, the pump 3101 and valves 311, 312, and 314 are controlled to supply the liquid composition from the external tank 313 to the tank 307.

As the electrode production apparatus is used, the liquid composition can be ejected to a desired area of an ejection target.

For example, the electrode composite material layer can be suitably used as a part of a structure of an electrochemical element. The structure of the electrochemical element other than the electrode composite material layer is not particularly limited, and may be appropriately selected from structures known in the related art. Examples of the structure include a positive electrode, a negative electrode, a separator, and an electrolyte layer.

Fig. 6 illustrates an example of the method for producing the electrode according to the present embodiment.

The method for producing the electrode 100 includes sequentially ejecting the liquid composition 12A onto an electrode substrate 11 using a liquid jet device 300'.

First, a long and narrow electrode substrate 11 is prepared. The electrode substrate 11 is wound around a core, and the electrode substrate 11 is set on a feeding roller 304 and winding roller 305 in a manner such that the side of the electrode composite material layer 12, at which an electrode composite material layer is formed, faces upwards in Fig. 6. The feeding roller 304 and winding roller 305 rotate in the anticlockwise direction to transport the electrode substrate 11 from the right to the left in Fig. 6. In the manner similar as in Fig. 1, droplets of the liquid composition 12A are ejected onto the sequentially transported electrode substrate 11 from the liquid jet head 306 set above the section of the electrode substrate 11 between the feeding roller 304 and winding roller 305.

A plurality of the liquid jet heads 306 may be arranged along the direction substantially parallel to or perpendicular to the traveling direction of the electrode substrate 11. Next, the electrode substrate 11 on which the droplets of the liquid composition 12A are ejected is transported to a heating system 309 by the feeding roller 304 and winding roller 305. As a result, an electrode composite material layer 12 is formed to obtain an electrode 100. The electrode 100 is then cut into a desired size by punching, etc.

The heating system 309 may be disposed at the upper side or lower side of the electrode substrate 11. Moreover, a plurality of the heating systems 309 may be disposed.

The heating system 309 is not particularly limited, except that the heating system 309 is not directly brought into contact with the liquid composition 12A. Examples of the heating system 309 include resistance heaters, IR heaters, and fan heaters. A plurality of the heating systems 309 may be disposed. Moreover, a curing device using UV may be disposed for polymerization.

Moreover, the liquid composition 12A ejected onto the electrode substrate 11 is preferably heated. For heating the liquid composition 12A, the liquid composition 12A may be heated by the stage, or a heating system other than the stage. The heating system may be disposed at the upper side or lower side of the electrode substrate 11. A plurality of the heating systems may be disposed.

The heating temperature is not particularly limited, As the heating is performed, the liquid composition 12A is dried to form an electrode composite material layer.

As in Fig. 7, moreover, the tank 307 may be configured so that the ink is supplied to the tank 307 from tanks 313A and 313B connected to tanks 307A and 307B. The liquid jet head 306 may have a plurality of heads 306A and 306B.

[Embodiment for indirectly applying liquid composition to base to form electrode composite material layer or electrode]

Figs. 8 and 9 are schematic views illustrating examples of a printer employing an inkjet system and transfer system as an applicator, where the printer serves as the electrode production apparatus of the present embodiment. Fig. 8 is a schematic view illustrating the printer using a drum-shaped intermediate transfer member. Fig. 9 is a schematic view illustrating the printer using an endless-belt intermediate transfer member.

The printer 400' illustrated in Fig. 8 is an inkjet printer configured to transfer a liquid composition layer or electrode composite material layer onto a base (the electrode substrate) via an intermediate transfer member 4001 to form the electrode composite layer on the base.

The printer 400' includes an inkjet unit 420, a transfer drum 4000, a pre-treatment unit 4002, an absorbing unit 4003, a heater 4004, and a cleaner 4005.

The inkjet unit 420 includes a head module 422 holding a plurality of heads 101. Each head 101 is configured to eject the liquid composition onto the intermediate transfer member 4001 supported by the transfer drum 4000 to form a liquid composition layer on the intermediate transfer member 4001. Each head 101 is a line head, in which nozzles are aligned over a region covering a width of a recording region for a maximum size of a usable base. The head 101 has a nozzle face, where nozzles are formed, at the bottom side of the head 101. The nozzle face faces the surface of the intermediate transfer member 4001 with a minute gap between the nozzle face and the surface of the intermediate transfer member 4001. In the present embodiment, the intermediate transfer member 4001 has a structure where the intermediate transfer member circulates and travels along a circular path, thus the heads 101 are radially disposed.

The transfer drum 4000 is disposed to face an impression cylinder 621 to form a transfer nip. For example, the pre-treatment unit 4002 is configured to apply a reaction liquid onto the intermediate transfer member 4001 before ejection of the liquid composition by the head 101. The reaction liquid is used to increase the viscosity of the liquid composition. The absorbing unit 4003 is configured to absorb the liquid component of the liquid composition layer on the intermediate transfer member 4001 before transferring. The heater 4004 is configured to heat the ink layer on the intermediate transfer member 4001 before transferring. As the liquid composition layer is heated, the liquid composition layer is dried to form an electrode composite material layer. Moreover, the organic solvent is removed to improve transferability of the electrode composite material layer to the base. The cleaner 4005 is configured to clean the intermediate transfer member 4001 to remove foreign matter, such as ink residues and dust on the intermediate transfer member 4001 after transferring.

The outer circumferential surface of the impression cylinder 621 is pressed against the intermediate transfer member 4001. As the base passes through the transfer nip between the impression cylinder 621 and the intermediate transfer member 4001, the liquid composition layer or electrode composite material layer on the intermediate transfer member 4001 is transferred onto the base. The impression cylinder 621 may include at least one grip system that is disposed on the circumferential surface of the impression cylinder 621 and grips the edge of the base.

The printer 400'' illustrated in Fig. 9 is an inkjet printer configured to transfer a liquid composition layer or electrode composite material layer onto a base via an intermediate transfer belt 4006 to form the electrode composite material layer on the base.

The printer 400" is configured to eject droplets of the liquid composition from a plurality of heads 101 disposed in an inkjet unit 420 to form a liquid composition layer on the outer circumferential surface of the intermediate transfer belt 4006. The liquid composition layer formed on the intermediate transfer belt 4006 is heated by a heater 4007 to dry the liquid composition layer to form an electrode composite material layer. The electrode composite material layer forms a film on the intermediate transfer belt 4006.

The electrode composite material layer formed as a film on the intermediate transfer belt 4006 is transferred onto a base at a transfer nip where the intermediate transfer belt 4006 faces a transfer roller 622. The surface of the intermediate transfer belt 4006 is cleaned by a cleaning roller 4008 after transferring.

The intermediate transfer belt 4006 is supported by a driving roller 4009a, a counter roller 4009b, a plurality (four in this example) of shape retaining rollers 4009c, 4009d, 4009e, and 4009f, and a plurality (four in this example) of support rollers 4009g to move in the direction indicated with the arrow in Fig. 9. The support rollers 4009g each disposed to face the heads 101 maintain the tension of the intermediate transfer belt 4006 when ink droplets are ejected from the head 101.

(Electrochemical element)

The electrochemical element of the present disclosure includes the above-described electrode of the present disclosure. The electrochemical element may further include other components, as necessary.
The electrode is appropriately selected according to the descriptions in association with the above-described electrode of the present disclosure.
The electrode may be a positive electrode or a negative electrode.
The electrochemical element generally includes a positive electrode, a negative electrode, an electrolyte disposed between the positive electrode and the negative electrode, a separator configured to retain the electrolyte in the position between the positive electrode and the negative electrode, and a housing.
In the case where a solid electrolyte or gel polymer electrolyte is used as the electrolyte, a separator can be omitted.
The method for producing the electrochemical element may be appropriately selected from methods available in the related art, except that the electrode of the present disclosure is used.

<Electrolyte>

As the electrolyte, an electrolyte aqueous solution or non-aqueous electrolyte may be used.

[Electrolyte aqueous solution]

The electrolyte aqueous solution is an aqueous solution in which an electrolyte salt is dissolved in water.
Examples of the electrolyte salt include sodium hydroxide, potassium hydroxide, sodium chloride, potassium chloride, ammonium chloride, zinc chloride, zinc acetate, zinc bromide, zinc iodide, zinc tartrate, and zinc perchlorate.

[Non-aqueous electrolyte]

As the non-aqueous electrolyte, a non-aqueous electrolyte solution, solid electrolyte, or gel polymer electrolyte may be used.

-Non-aqueous electrolyte solution-

The non-aqueous electrolyte solution is an electrolyte solution, in which an electrolyte salt is dissolved in a non-aqueous solvent.

--Non-aqueous solvent--

The non-aqueous solvent is not particularly limited. For example, an aprotic organic solvent is preferably used as the non-aqueous solvent. As the aprotic organic solvent, a carbonate-based organic solvent (e.g., linear carbonates and cyclic carbonates) may be used. Among the above-listed examples, linear carbonates are preferred because an electrolyte salt is highly soluble in the linear carbonates. Moreover, the aprotic organic solvent preferably has a low viscosity.
Examples of the linear carbonates include dimethyl carbonate (DMC), diethyl carbonate (DEC), and methylethyl carbonate (EMC).
An amount of the linear carbonate in the non-aqueous solvent is preferably 50% by mass or greater. When the amount of the linear carbonate in the non-aqueous solvent is 50% by mass or greater, an amount of cyclic substances (e.g., cyclic carbonate and cyclic ester) that is a non-aqueous solvent other than the linear carbonate and has a high dielectric constant is small. When a non-aqueous electrolyte solution having a high concentration, i.e., 2 M or higher, is produced, therefore, a resulting non-aqueous electrolyte solution has low viscosity to achieve excellent penetration of the non-aqueous electrolyte solution into an electrode and excellent ion diffusion.
Examples of the cyclic carbonates include propylene carbonate (PC), ethylene carbonate (EC), butylene carbonate (BC), and vinylene carbonate (VC).
As a non-aqueous solvent other than the carbonate-based organic solvent, for example, an ester-based organic solvent (e.g., cyclic esters and linear esters), or an ether-based organic solvent (e.g., cyclic ethers and linear ethers) may be used.
Examples of the cyclic esters include γ-butyrolactone (γBL), 2-methyl-γ-butyrolactone, acetyl-γ-butyrolactone, and γ-valerolactone.
Examples of the linear esters include alkyl propionate, dialkyl malonate, alkyl acetate (e.g., methyl acetate (MA)

and ethyl acetate), and alkyl formate (e.g., methyl formate (MF) and ethyl formate).

Examples of the cyclic ethers include tetrahydrofuran, alkyl tetrahydrofuran, alkoxy tetrahydrofuran, dialkoxy tetrahydrofuran, 1,3-dioxolane, alkyl-1,3-dioxolane, and 1,4-dioxolane.

Examples of the linear ethers include 1,2-dimethoxyethane (DME), diethyl ether, ethylene glycol dialkyl ether, diethylene glycol dialkyl ether, triethylene glycol dialkyl ether, and tetraethylene glycol dialkyl ether.

--Electrolyte salt--

The electrolyte salt is not particularly limited, except that the electrolyte salt has high ion conductivity and can be dissolved in a non-aqueous solvent.

The electrolyte salt preferably includes a halogen atom. Examples of cations constituting the electrolyte salt include lithium ions. Examples of anions constituting the electrolyte salt include $BF_4^-$, $PF_6^-$, $AsF_6^-$, $CF_3SO_3^-$, $(CF_3SO_2)_2N^-$, and $(C_2F_5SO_2)_2N^-$.

The lithium salt is not particularly limited, and may be appropriately selected according to the intended purpose. Examples of the lithium salt include lithium hexafluorophosphate ($LiPF_6$), lithium tetrafluoroborate ($LiBF_4$), lithium hexafluoroarsenate ($LiAsF_6$), lithium trifluoromethanesulfonate (LiCFsSOs), lithium bis(trifluoromethanesulfonyl)imide ($LiN(CF_3SO_2)_2$), and lithium bis(pentafluoroethanesulfonyl)imide ($LiN(C_2F_5SO_2)_2$). Among the above-listed examples, $LiPF_6$ is preferred in view of ion conductivity, and $LiBF_4$ is preferred in view of stability.

The electrolyte salt may be used alone or in combination.

A concentration of the electrolyte salt in the non-aqueous electrolyte solution may be appropriately selected according to the intended purpose. When the non-aqueous electrochemical element is a rocking chair or swing battery-type electrochemical element, the concentration is preferably from 1 mol/L to 2 mol/L. When the electrochemical element is a reserve battery-type electrochemical element, the concentration is preferably from 2 mol/L to 4 mol/L.

-Solid electrolyte-

As the solid electrolyte, any of the above-described materials may be used.

-Gel polymer electrolyte-

The gel polymer electrolyte is not particularly limited, except that the gel polymer electrolyte exhibits ion conductivity. The gel polymer electrolyte may be appropriately selected according to the intended purpose. Examples of a polymer constituting a network structure of the gel polymer electrolyte include polyethylene oxide, polypropylene oxide, polyacrylonitrile, polymethyl methacrylate, polyvinyl chloride, vinylidene fluoride-hexafluoropropylene copolymers, and polyethylene carbonate.

Moreover, examples of solvent molecules retained in the gel polymer electrolyte include ionic liquids.

Examples of the ionic liquids include 1-methyl-1-propylpyrrolidinium bis(fluorosulfonyl)imide, 1-butyl-1-methylpyrrolidinium bis(fluorosulfonyl)imide, 1-methyl-1-propylpiperidinium bis(fluorosulfonyl)imide, 1-ethyl-3-methylimidazolium bis(fluorosulfonyl)imide, 1-methyl-3-propylimidazolium bis(fluorosulfonyl)imide, and N,N-diethyl-N-methyl-N-(2-methoxyethyl)ammonium bis(fluorosulfonyl)imide.

Moreover, a mixture of a liquid and a lithium salt may be used. Examples of the liquid include tetraglyme (tetraethylene glycol dimethyl ether), propylene carbonate, fluoroethylene carbonate, ethylene carbonate, and diethyl carbonate.

The lithium salt is not particularly limited, and may be appropriately selected according to the intended purpose. Examples of the lithium salt include lithium hexafluorophosphate ($LiPF_6$), lithium tetrafluoroborate ($LiBF_4$), lithium hexafluoroarsenate ($LiAsF_6$), lithium trifluoromethanesulfonate (LiCFsSOs), lithium bis(trifluoromethanesulfonyl)imide ($LiN(CF_3SO_2)_2$), and lithium bis (pentafluoroethanesulfonyl)imide ($LiN(C_2F_5SO_2)_2$).

Gel polymer electrolytes other than the above-listed examples may be used without any problem, as long as such gel polymer electrolytes do not depart from the scope of the present disclosure. The gel polymer electrolytes may be used alone or in combination.

As an electrolyte material dissolved or dispersed in a liquid to constitute the above-described gel polymer electrolyte, a solution in which the above-described polymer compound and the ionic liquid or lithium salt are dissolved may be used. Moreover, a material for forming a precursor of the gel polymer electrolyte may be used in combination. Examples of such material include a solution in which polyethylene oxide or polypropylene oxide having an acrylate group at both terminals and an ionic liquid or lithium salt are dissolved.

<Separator>

The separator is optionally disposed between the negative electrode and the positive electrode to avoid short-circuiting between the negative electrode and the positive electrode.
Examples of the separator include paper (e.g., Kraft paper, vinylon mixed paper, and synthetic pulp mixed paper), polyolefin non-woven fabrics (e.g., cellophane, polyethylene grafted membranes, and polypropylene melt blown non-woven fabrics), polyamide non-woven fabrics, glass fiber non-woven fabrics, and microporous films.
A size of the separator is not particularly limited, except that the separator can be used in an electrochemical element. The separator may have a single-layer structure or a multi-layer structure.
A separator is used when an electrolyte aqueous solution or non-aqueous electrolyte solution is used as an electrolyte. When a solid electrolyte or gel polymer electrolyte is used as the electrolyte, the separator can be omitted.

<Housing>

The housing is not particularly limited, except that the housing can seal the electrodes, the electrolyte, and the separator, or seal the electrodes and the solid electrolyte or gel polymer electrolyte.

(Electrochemical element production apparatus and method for producing electrochemical element)

The electrochemical element production apparatus of the present disclosure includes an electrode producing unit and an element forming unit, and may further include other units, as necessary. The electrode producing unit is configured to produce an electrode using the above-described electrode production apparatus of the present disclosure. The element forming unit is configured to produce an electrochemical element using the electrode.
The method for producing the electrochemical element of the present disclosure includes an electrode producing step and an element forming step, and may further include other steps, as necessary. The electrode producing step includes producing an electrode using the above-described electrode production apparatus of the present disclosure. The element forming step includes producing an electrochemical element using the electrode.

<Electrode producing unit and electrode producing step>

The electrode producing unit includes the above-described storage container and an applicator configured to apply the above-described liquid composition stored in the storage container to an electrode substrate. The electrode producing unit may further include other members, as necessary.
The electrode producing step includes an applying step, and may further include other steps, as necessary. The applying step includes applying the above-described liquid composition of the present disclosure.
The storage container, applicator, and applying step are appropriately selected according to the descriptions in association with the above-described storage container, electrode production apparatus, and method for producing the electrode of the present disclosure.

<Element forming unit and element forming step>

The element forming unit is a unit configured to produce an electrochemical element using the electrode.
The element forming step includes producing an electrochemical element using the electrode.
The method for producing an electrochemical element using the electrode is not particularly limited, and may be appropriately selected from electrochemical element production methods available in the related art according to the intended purpose. Examples of the method include a method that performs at least one of arrangement of a counter electrode, winding or laminating, and storing in a container to form an electrochemical element.
The element forming step may not include the entire process of formation of an element, and may include part of the process of formation of an element, such as formation of an electrode element.

-Electrode element-

The electrode element includes electrodes and a separator.
Fig. 10 illustrates an example of an electrode element used for the electrochemical element of the present embodiment.
The electrode element 40 includes a negative electrode 15, a positive electrode 25, and a separator 30B disposed between the negative electrode 15 and the positive electrode 25. The positive electrode 25 is disposed on both faces of the negative electrode 15. Moreover, a leading wire 41 is connected to the negative electrode substrate

11, and a leading wire 42 is connected to the positive electrode substrate 21.

In case of a solid electrochemical element, the separator 30B is replaced with a solid electrolyte or gel polymer electrolyte.

The negative electrode 15 includes a negative electrode substrate 11B and a negative electrode composite material layer 12B formed on both faces of the negative electrode substrate 11B.

The positive electrode 25 includes a positive electrode substrate 21, and a positive electrode composite material layer 22 formed on both faces of the positive electrode substrate 21.

The numbers of the negative electrodes 15 and positive electrodes 25 stacked in the electrode element 40 are not particularly limited. The number of the negative electrodes 15 in the electrode element 40 and the number of the positive electrodes 25 in the electrode element 40 may be the same or different.

[Electrochemical element]

Fig. 11 illustrates an example of the electrochemical element of the present embodiment.

In the case where the electrochemical element 1 is a liquid-based electrochemical element, an electrolyte aqueous solution or non-aqueous electrolyte is injected into the electrode element 40 to form an electrolyte layer 51, and the electrode element 40 is sealed with a housing 52. In the electrochemical element 1, leading wires 41 and 42 are extended to the outside of the housing 52.

In the case where the electrochemical element 1 is a solid electrochemical element, the separator 30B can be replaced with a solid electrolyte or gel polymer electrolyte.

A shape of the electrochemical element 1 is not particularly limited. Examples of the shape of the electrochemical element include laminate electrochemical elements, cylindrical electrochemical elements, in each of which sheet electrodes and a separator are spirally disposed, cylindrical electrochemical elements having an inside-out structure where pellet electrodes and a separator are combined, and coin electrochemical elements, in each of which pellet electrodes and a separator are stacked.

[Use of electrochemical element]

The electrochemical element may be suitably used as a secondary battery cell.

Use of the electrochemical element is not particularly limited. Examples of the use include laptop computers, personal computers with graphic tablets for input, portable personal computers, electronic book readers, mobile phones, portable facsimiles, portable photocopiers, portable printers, headphones, video cameras, liquid crystal display televisions, portable cleaners, portable CD players, mini-disk players, transceivers, electronic notebooks, calculators, memory cards, portable tape recorders, radio players, backup power supplies, motors, lighting equipment, toys, game consoles, clocks, stroboscopic lamps, cameras, and vehicles.

Examples

The present disclosure will be concretely described below by way of Examples. The present disclosure should not be construed as being limited to these Examples.

In Examples and Comparative Examples below, a moisture content of a liquid composition, dehydration of an organic solvent and adjustment of a moisture content of the organic solvent, a solid content of the liquid composition, a median diameter $D_{50}$ of particles of the active material in the liquid composition, dispersibility of the active material in the liquid composition, dispersion stability of the liquid composition, a viscosity of the liquid composition, an ejection behavior, and capacity rate characteristics of a secondary battery cell were calculated, measured, or evaluated in the following manner.

[Moisture content of liquid composition]

The moisture content of the obtained liquid composition was measured at room temperature (25°C) by a Karl Fischer moisture meter (CA-200, available from Nittoseiko Analytech Co., Ltd.).

[Dehydration of organic solvent and adjustment of moisture content of organic solvent]

Molecular sieves were mixed with an organic solvent at a ratio of 20% by volume, followed by storing for 72 hours or longer to perform dehydration. The moisture content of the resulting organic solvent was measured in the manner described above, followed by adding water to obtain a desired moisture content.

[Solid content of liquid composition]

The solid content of the liquid composition was calculated by the following equation.

$$\text{Solid content} = \{\text{total solids (parts by mass)}/(\text{total solids (parts by mass)} + \text{organic solvent (parts by mass)} + \text{water (parts by mass)})\} \times 100(\%)$$

[Median diameter $D_{50}$ of particles of active material]

The particle size distribution of particles of the active material in the obtained liquid composition was measured at room temperature (25°C) by a laser diffraction particle size analyzer (Mastersizer 3000, available from Malvern Panalytical Ltd.) according to ISO 13320:2009. Within the measured particle size distribution of the particles of the active material in the liquid composition, a median diameter that was the cumulative frequency of 50% was determined as Dso.

[Dispersibility of active material in liquid composition]

The dispersibility of the active material in the liquid composition was evaluated based on the following criteria.
The acceptable level is the evaluation criteria "a" and "b." The evaluation criteria are set to define a high level of dispersibility that cannot be judged by naked eye. The result reaching the acceptable level means that a ratio of the surface of the active material exposed is notably large to exhibit high dispersibility. Therefore, electric charges are transferred smoothly via surfaces of the particles of the active material, leading to excellent battery characteristics. When other components, such as a conductive agent, are added, moreover, the contact area between the active material and the conductive agent is increased to obtain improved battery characteristics.

-Evaluation criteria-

The dispersibility index was calculated by the following equation, and evaluated based on the following criteria.

$$\text{Dispersibility index} = D_{50} \text{ of particles of active material in liquid composition/mean diameter } d_{50} \text{ of primary particles of active material}$$

a: dispersibility index ≤ 1.5
b: 1.5 < dispersibility index ≤ 2.0
c: 2.0 < dispersibility index

The mean diameter $d_{50}$ of the primary particles of the active material was determined by observing the population of the particles of the active material under a scanning electron microscope (available from JEOL Ltd.) to determine a volume-based particle size distribution and calculating dso as a median diameter.

[Dispersion stability (thixotropic index) of active material in liquid composition]

The dispersion stability was evaluated from the thixotropic index based on the following criteria.
The practically usable level is the evaluation criteria "a" to "c," but the acceptable level is the evaluation criteria "a" to "b." The result reaching the acceptable level means that aggregation of particles of the active material is minimized even in low shear force conditions, and excellent dispersion stability is achieved. Therefore, the solid content of the liquid composition can be increased, as well as achieving excellent redispersibility after standing for storage. Moreover, the liquid composition desirably responds to intermittent coating when the liquid composition is applied to a base by intermittent coating. Since the aggregation of the particles of the active material can be minimized during the period between the coating of the liquid composition to the base and drying of the liquid composition, if a conductive agent is added as other components, for example, a contact area between the active material and the conductive agent is

increased to achieve excellent battery characteristics.

-Evaluation criteria-

The thixotropic index was calculated by the following equation, and evaluated based on the following criteria.

$$\text{Thixotropic index (TI)} = \text{viscosity at 10 rpm}/\text{viscosity at 100 rpm}$$

a: $TI < 1.5$
b: $1.5 \leq TI < 2.0$
c: $2.0 \leq TI < 3.0$
d: $3.0 \leq TI$

[Viscosity of liquid composition]

The viscosity of the obtained liquid composition at 100 rpm and at 10 rpm was measured at room temperature (25°C) by a TV25 type viscometer (cone plate viscometer, available from Toki Sangyo Co., Ltd.).

[Ejection behavior of liquid composition]

The liquid composition was ejected onto an aluminum foil fixed on a hotplate by a liquid jet device (EV2500, available from Ricoh Company Limited). The ejection behavior was evaluated based on the following criteria. The evaluation criterion "a" is an acceptable level.

a: The liquid composition could be ejected.
b: The liquid composition could not be ejected.

[Capacity rate characteristics of secondary battery cell (without solid electrolyte)]

Among the liquid compositions to which the evaluation of the ejection behavior was performed, the liquid compositions evaluated as "a" were each dried on a hotplate heated at 120°C to obtain a positive electrode. The capacity rate characteristics of the secondary battery cell were measured using the obtained positive electrode in the following manner.

The capacity rate characteristics of the secondary battery cell were measured by a charge-discharge test system TOSCAT 3001 (available from Toyo System Co., Ltd.). After punching out the produced positive electrode to a circle having a diameter of 16 mm, the circular positive electrode, a glass separator having a thickness of 100 μm (available from ADVANTEC), an electrolyte solution (1.5 mol/L $LiPF_6$/(ethylene carbonate (EC):dimethyl carbonate (DMC):ethylmethyl carbonate (EMC) (1:1:1 [v/v%]))(Kishida Chemical Co., Ltd.)), lithium having a thickness of 200 μm (available from Honjo Metal Co., Ltd.) serving as a counter electrode were placed in a coin tin, to thereby obtain an electrochemical element.

The obtained electrochemical element was charged to 4.2 V at room temperature (25°C) at the constant current that was 20% of the capacity per unit weight calculated from the theoretical capacity of the positive electrode active material, followed by discharging to 3.0 V at the constant current to perform initial charging and discharging. Subsequently, the same charging and discharging were performance once, the discharge capacity of which was determined as discharge capacity C0.

Moreover, the electrochemical element was charged and discharged once in the same manner as described above at room temperature (25°C) at the current value that was 200% of the capacity per unit weight calculated from the theoretical capacity of the positive electrode active material. The discharge capacity of the above-described charging and discharging was determined as C1.

-Evaluation criteria-

The capacity retention rate was defined as follows, and evaluated based on the following criteria. The evaluation criteria "a" to "d" are acceptable levels.

$$\text{Capacity retention rate } \Delta C\ (\%) = \text{discharge capacity C1/discharge capacity C0} \times 100$$

a: 90 ≤ capacity retention rate ΔC
b: 80 ≤ capacity retention rate ΔC < 90
c: 70 ≤ capacity retention rate ΔC < 80
d: 60 ≤ capacity retention rate ΔC < 70
e: capacity retention rate ΔC < 70

[Capacity rate characteristics of secondary battery cell (with solid electrolyte)]

Among the liquid compositions to which the evaluation of the ejection behavior was performed, the liquid compositions evaluated as "a" were each dried on a hotplate heated at 80°C to obtain a positive electrode. The capacity rate characteristics of the secondary battery cell were measured using the obtained positive electrode in the following manner.

The capacity rate characteristics of the secondary battery cell were measured by a charge-discharge test system TOSCAT 3001 (available from Toyo System Co., Ltd.). After punching out the produced positive electrode to a circle having a diameter of 10 mm, the circular positive electrode, a solid electrolyte having a thickness of 100 μm, and as a counter electrode, indium having a thickness of 200 μm (available from Honjo Metal Co., Ltd.) and lithium having a thickness of 200 μm (available from Honjo Metal Co., Ltd.) were placed in a coin tin, to thereby obtain an electrochemical element. As the solid electrolyte, an argyrodite-type sulfide solid electrolyte $Li_6PS_5Cl$ (LPSC) synthesized according to the method described in the literature, "J. Power Sources. 2018, 396, 33-40," was used.

The obtained electrochemical element was charged to 3.7 V at room temperature (25°C) at the constant current that was 20% of the capacity per unit weight calculated from the theoretical capacity of the positive electrode active material, followed by discharging to 2.4 V at the constant current to perform initial charging and discharging. Subsequently, the same charging and discharging were performance once, the discharge capacity of which was determined as discharge capacity C0.

Moreover, the electrochemical element was charged and discharged once in the same manner as above at room temperature (25°C) at the current value that was 200% of the capacity per unit weight calculated from the theoretical capacity of the positive electrode active material. The discharge capacity of the above-described charging and discharging was determined as C1.

-Evaluation criteria-

The capacity retention rate was defined as follows, and was evaluated based on the following criteria. The evaluation criteria "a" to "d" are acceptable levels.

$$\text{Capacity retention rate } \Delta C\ (\%) = \text{discharge capacity C1/discharge capacity C0} \times 100$$

a: 90 ≤ capacity retention rate ΔC
b: 80 ≤ capacity retention rate ΔC < 90
c: 70 ≤ capacity retention rate ΔC < 80
d: 60 ≤ capacity retention rate ΔC < 70
e: capacity retention rate ΔC < 70

(Example 1)

[Surface coating of active material with ion-conductive oxide]

As active material, a nickel-based positive electrode active material (nickel cobalt lithium manganese oxide, may be abbreviated as "NCM1" hereinafter, available from Toshima Manufacturing Co., Ltd., mean diameter of primary particles: 3.5 μm) was used. As ion-conductive oxide covering surfaces of the NCM1 particles, $LiNbO_3$ was used. The $LiNbO_3$ layer was formed by performing hydrolysis of an alkoxide solution including lithium and niobium at the surfaces

of the NCM1 particles with reference to the literature, "J. Mater. Chem. A. 2021, 9, 4117-4125." First, metal lithium (available from Honjo Metal Co., Ltd.) was dissolved in anhydrous ethanol (available from KANTO CHEMICAL CO., INC.) to prepare an ethanol solution of lithium ethoxide. To the prepared solution, niobium pentaethoxide ($Nb(OC_2H_5)_5$) (available from KOJUNDO CHEMICAL LABORATORY CO., LTD.) was added to prepare an alkoxide solution including lithium and niobium. The fluidized bed of the NCM1 particles was created by a tumbling fluid bed generator (MP-01, available from Powrex Corporation), and the alkoxide solution was sprayed to the NCM1 particles to prepare a precursor powder particles in which surfaces of the NCM1 particles were each coated with the alkoxide. The resulting coated particles were dried at 350°C in the dry air atmosphere to form a $LiNbO_3$ layer on a surface of each of the NCM1 particles (may be referred to as "LNO/NCM1" hereinafter).

[Preparation of liquid composition]

$LiNbO_3$/NCM1 obtained as the active material in the above-described manner and methyl hexanoate (available from Tokyo Chemical Industry Co., Ltd.) serving as the organic solvent were mixed at a mass ratio with which a solid content of the resulting mixture becomes 60% by mass. The moisture content of the methyl hexanoate as the organic solvent had been adjusted in advance in the above-described manner. Then, the mixture was irradiated with ultrasonic waves by an ultrasonic homogenizer (Ultrasonic Generator, available from NIPPON SEIKI CO., LTD.) for 3 minutes, to thereby obtain a liquid composition of Example 1.

The moisture content and viscosity of the liquid composition, and the median diameter $D_{50}$ of the particles of the active material in the liquid composition were measured in the above-described manner. The dispersibility and dispersion stability of the active material in the liquid composition were evaluated in the above-described manner. The composition and results are presented in Tables 1-1 and 1-2.

(Examples 2 to 3 and Comparative Examples 1 to 3)

A liquid composition was prepared in the same manner as in Example 1, except that the moisture content of methyl hexanoate was adjusted to change the moisture content of the liquid composition. The prepared liquid composition was evaluated in the same manner as in Example 1. The composition and results are presented in Tables 1-1 and 1-2.

(Examples 4 to 30 and Comparative Examples 4 to 11)

A liquid composition was prepared in the same manner as in Example 1, except that the organic solvent was changed as presented in Tables 1-1 and 2-1. The prepared liquid composition was evaluated in the same manner as in Example 1. The composition and results are presented in Tables 1-1 and 1-2 and Tables 2-1 and 2-2.

(Example 31)

A liquid composition was prepared in the same manner as in Example 1, except that NCM1 particles that were not coated with the ion-conductive oxide were used as the active material. The prepared liquid composition was evaluated in the same manner as in Example 1.

For NCM1 particles, NCM1 particles that had been vacuum-dried at 80°C for 12 hours were used. The composition and results are presented in Tables 2-1 and 2-2.

(Example 32)

A liquid composition was prepared in the same manner as in Example 31, except that a nickel-based positive electrode active material (nickel cobalt lithium manganese oxide (may be referred to as "NCM2" hereinafter), available from Toshima Manufacturing Co., Ltd., mean diameter of primary particles: 8.5 μm) was used as the active material. The liquid composition was evaluated in the same manner as in Example 1. The composition and results are presented in Tables 2-1 and 2-2.

(Example 33)

A liquid composition was prepared in the same manner as in Example 31, except that a nickel-based positive electrode active material (lithium nickel cobalt aluminum oxide (may be referred to as "NCA" hereinafter), available from JFE Mineral & Alloy Company, Ltd., mean diameter of the primary particles: 3.5 μm) was used as the active material. The liquid composition was evaluated in the same manner as in Example 1. The composition and results are presented in Tables 2-1 and 2-2.

(Example 34)

A liquid composition was prepared in the same manner as in Example 1, except that $Li_4Ti_5O_{12}$ was used as the ion-conductive oxide. The liquid composition was evaluated in the same manner as in Example 1.
The $Li_4Ti_5O_{12}$ coating layer was formed in the same manner as in Example 1, except that the niobium pentaethoxide was replaced with titanium tetraisopropoxide ($Ti(i\text{-}OC_3H_7)_4$). The composition and results are presented in Tables 2-1 and 2-2.

(Example 35)

A liquid composition was prepared in the same manner as in Example 1, except that $LiTaO_3$ was used as the ion-conductive oxide. The liquid composition was evaluated in the same manner as in Example 1.
The $LiTaO_3$ coating layer was formed in the same manner as in Example 1, except that the niobium pentaethoxide was replaced with tantalum pentaethoxide ($Ta(OC_2H_5)_5$). The composition and results are presented in Tables 2-1 and 2-2.

(Examples 36 to 38)

$LiNbO_3$/NCM1 particles obtained as the active material particles in the same manner as in Example 1, acetylene black (may be abbreviated as "AB" hereinafter, product name: DENKA BLACK, available from Denka Company Limited) serving as a conductive agent and vacuum dried for 12 hours at 80°C, Solsperse™ 13940 (may be abbreviated as "S13940" hereinafter, available from The Lubrizol Corporation) serving as a dispersing agent for dispersing the conductive agent and vacuum dried for 12 hours at room temperature, polybutyl methacrylate (abbreviated as "PBMA" hereinafter, available from Sigma-Aldrich) serving as a binder and vacuum dried for 12 hours at 80°C, and methyl hexanoate (available from Tokyo Chemical Industry Co., Ltd.) serving as an organic solvent, the moisture content of which had been adjusted according to the above-described method, were mixed according to the solid content and component mixing ratios as presented in Tables 3-1-1 and 3-1-2. The resulting mixture was irradiated with ultrasonic waves for 3 minutes by an ultrasonic homogenizer (Ultrasonic Generator, available from NIPPON SEIKI CO., LTD.) to thereby obtain a liquid composition.
The moisture content and viscosity of the liquid composition, and the median diameter $D_{50}$ of the particles of the active material in the liquid composition were measured according to the above-described methods in the same manner as in Example 1. The dispersibility of the active material in the liquid composition and dispersion stability of the liquid composition were evaluated in the same manner as described above.
Moreover, the ejection behavior was evaluated according to the above-described method. The result of the ejection behavior evaluation was "a." Therefore, the liquid composition was ejected on an aluminum foil fixed on a hotplate heated at 120°C to dry the liquid composition to thereby produce a positive electrode having a basis weight of 20 $mg/cm^2$. The capacity rate characteristics of the secondary battery cell were measured according to the above-described method using the obtained positive electrode. The composition and results are presented in Tables 3-1-1, 3-1-2, and 3-2.

(Comparative Example 12)

A liquid composition was prepared and various evaluations were performed in the same manner as in Example 38, except that the composition and solid content as presented in Tables 3-1-1 and 3-1-2 were used.
The result of the ejection behavior evaluation was "b." Therefore, a film of the liquid composition was formed on an aluminum foil by bar coating, and the liquid composition was dried on a hotplate heated at 120°C to thereby produce a positive electrode having a basis weight of 20 $mg/cm^2$. The capacity rate characteristics of the secondary battery cell were measured according to the above-described method using the obtained positive electrode. The composition and results are presented in Tables 3-1-1, 3-1-2, and 3-2.

(Example 39)

[Preparation of carbon-based material dispersion liquid]

AB serving as a conductive agent and vacuum dried for 12 hours at 80°C, S13940 serving as a dispersing agent for dispersing the conductive agent and vacuum dried for 12 hours at room temperature, and methyl hexanoate (available from Tokyo Chemical Industry Co., Ltd.) serving as an organic solvent, the moisture content of which had been adjusted according to the above-described method, were mixed so that the amount of the conductive agent was

8% by mass and the amount of the dispersing agent was 1.6% by mass. The resulting mixture was irradiated with ultrasonic waves for 3 minutes by an ultrasonic homogenizer (Ultrasonic Generator, available from NIPPON SEIKI CO., LTD.) to obtain a carbon-based material dispersion liquid, in which the carbon-based material AB was dispersed.

[Preparation of liquid composition]

The obtained carbon-based material dispersion liquid, $LiNbO_3$/NCM1 obtained in the same manner as in Example 1 as an active material, PBMA serving as a binder and vacuum dried for 12 hours at 80°C, and methyl hexanoate (available from Tokyo Chemical Industry Co., Ltd.) serving as an organic solvent, the moisture content of which had been adjusted according to the above-described method, were mixed according to the solid content and component mixing ratios as presented in Tables 3-1-1 and 3-1-2. The resulting mixture was irradiated with ultrasonic waves for 3 minutes by an ultrasonic homogenizer (Ultrasonic Generator, available from NIPPON SEIKI CO., LTD.) to thereby obtain a liquid composition. The obtained liquid composition was evaluated in the same manner as in Example 1.

Moreover, the ejection behavior was evaluated according to the above-described method. The result of the ejection behavior evaluation was "a." Therefore, the liquid composition was ejected on an aluminum foil, and the liquid composition was dried on the hotplate heated at 120°C to thereby produce a positive electrode having a basis weight of 20 $mg/cm^2$. The capacity rate characteristics of the secondary battery cell were measured according to the above-described method using the obtained positive electrode. The composition and results are presented in Tables 3-1-1, 3-1-2, and 3-2.

(Example 40)

[Preparation of carbon-based material dispersion liquid]

AB serving as a conductive agent and vacuum dried for 12 hours at 80°C, S13940 serving as a dispersing agent for dispersing the conductive agent and vacuum dried for 12 hours at room temperature, and methyl hexanoate (available from Tokyo Chemical Industry Co., Ltd.) serving as an organic solvent, the moisture content of which had been adjusted according to the above-described method, were mixed so that the amount of the conductive agent was 8% by mass and the amount of the dispersing agent was 1.6% by mass. The resulting mixture was irradiated with ultrasonic waves for 3 minutes by an ultrasonic homogenizer (Ultrasonic Generator, available from NIPPON SEIKI CO., LTD.) to perform dispersing, to thereby obtain a carbon-based material dispersion liquid, in which the carbon-based material AB was dispersed.

Subsequently, centrifugal separation was performed, and the residual component obtained by removing the supernatant was dispersed again in methyl hexanoate. The above-described process of the centrifugal separation and re-dispersing was performed four times to perform refining, to thereby obtain a carbon-based material dispersion liquid from which the free dispersing agent was removed.

Preparation and evaluations of a liquid composition were performed in the same manner as in Example 39, except that the obtained carbon-based dispersion liquid was used. The composition and results are presented in Tables 3-1-1, 3-1-2, and 3-2.

(Example 41)

[Method for producing surface-modified carbon-based material (AB-COOH)]

To 162 parts by mass of ion-exchanged water, 18 parts by mass of AB was added. The resulting mixture was stirred for 1 hour at 10 rpm by a mechanical stirrer (2P-03, available from PRIMIX Corporation). Subsequently, 12 parts by mass of 4-aminophthalic acid (available from Tokyo Chemical Industry Co., Ltd.) was added, followed by adding 5 parts by mass of lithium nitrite (available from Mitsuwa Chemicals Co., Ltd.). The resulting mixture was stirred for 30 minutes, followed by adjusting the pH to 2.5 with 12N hydrochloric acid. The resulting mixture was stirred for 24 hours at room temperature, followed by adjusting the pH to 9.5 with a lithium hydroxide solution. Subsequently, centrifugal separation at 10,000 G and dispersion in ion-exchanged water in a decanter were performed four times to thereby obtain AB which was surface-modified with Li. The obtained dispersion liquid was treated with hydrochloric acid to adjust the pH to 5, followed by performing centrifugal separation at 10,000 G and dispersion in ion-exchanged water in a decanter three time. Thereafter, centrifugal separation and dispersion were performed again to obtain a cake from which the supernatant was removed. The obtained cake was vacuum dried for 48 hours at 80°C to obtain, as a powder, a surface-modified carbon-based material where surfaces of the AB particles were modified with a carboxyl group.

Preparation and evaluations of a liquid composition were performed in the same manner as in Example 39, except that the obtained surface-modified carbon-based material was used. The composition and results are presented

in Tables 3-1-1, 3-1-2, and 3-2.

(Example 42)

Preparation of a carbon-based material dispersion liquid from which a free dispersing agent was removed, preparation of a liquid composition, and evaluations of the liquid composition were performed in the same manner as in Example 40, except that the surface-modified carbon-based material (AB-COOH) synthesized in Example 42 was used as a conductive agent. The composition and results are presented in Tables 3-1-1, 3-1-2, and 3-2.

(Example 43)

[Method for producing surface-modified carbon-based material (AB-COOLi)]

To 162 parts by mass of ion-exchanged water, 18 parts by mass of AB was added. The resulting mixture was stirred for 1 hour at 10 rpm by a mechanical stirrer (2P-03, available from PRIMIX Corporation). Subsequently, 12 parts by mass of 4-aminophthalic acid (available from Tokyo Chemical Industry Co., Ltd.) was added, followed by adding 5 parts by mass of lithium nitrite (available from Mitsuwa Chemicals Co., Ltd.). The resulting mixture was stirred for 30 minutes, followed by adjusting the pH to 2.5 with 12N hydrochloric acid. After stirring the obtained dispersion liquid for 24 hours at room temperature, pH of the resulting dispersion liquid was adjusted to 9.5 with a lithium hydroxide aqueous solution. Subsequently, centrifugal separation at 10,000 G and dispersion in ion-exchanged water in a decanter were performed four times to obtain a surface-modified AB which was surface-modified with Li. The dispersion liquid was then subjected to centrifugal separation at 10,000 G and dispersion in ion-exchanged water in a decanter to thereby obtain a cake from which the supernatant was removed. The obtained cake was vacuum dried for 48 hours at 80°C to thereby obtain, as a powder, a surface-modified carbon-based material, where surfaces of the AB particles were each modified with -COOLi group.

Preparation of a liquid composition and evaluations of the liquid composition were performed in the same manner as in Example 39, except that the obtained surface-modified carbon-based material (AB-COOLi) was used. The composition and results are presented in Tables 3-1-1, 3-1-2, and 3-2.

(Example 44)

Preparation of a carbon-based material dispersion liquid from which free dispersing agent particles were removed, preparation of a liquid composition, and evaluations of the liquid composition were performed in the same manner as in Example 40, except that the surface-modified carbon-based material (AB-COOLi) synthesized in Example 43 was used as a conductive agent. The composition and results are presented in Tables 3-1-1, 3-1-2, and 3-2.

(Example 45)

[Method for producing surface-modified carbon-based material (AB-benzamide)]

To 320 parts by mass of ion-exchanged water, 18 parts by mass of AB was added, and the resulting mixture was stirred for 1 hour at room temperature.

To the mixture, 1.5 parts by mass of 3-amino-N-[2-(diethylamino)ethyl]benzamide (the compound represented by Structural Formula (1) below, available from Sigma-Aldrich) serving as an aniline compound (modifier) and 0.7 parts by mass of lithium nitrite (available from Mitsuwa Chemical Co., Ltd.) were added. The pH of the resulting mixture was adjusted to 2.5 with hydrochloric acid, followed by stirring. This process was performed once every four hours. The process was performed four times in total. After the fourth process, stirring was carried out for four hours.

Thereafter, centrifugal separation was carried out, and the residues obtained by removing the supernatant were added to ion-exchanged water to disperse again. This process was performed four times in total to obtain a re-dispersion liquid. The pH of the obtained re-dispersion liquid was adjusted to 10 with a lithium hydroxide aqueous solution, followed by stirring. This process was performed four times in total. After the fourth process, stirring was carried out for four hours.

Thereafter, centrifugal separation was carried out, and the residues obtained by removing the supernatant were added to ion-exchanged water to disperse again. This process was performed three times in total to obtain a re-dispersion liquid. The obtained re-dispersion liquid was subjected to centrifugal separation to remove the supernatant. The residues were dried by a vacuum drier to thereby obtain a surface-modified carbon-based material (AB-benzamide).

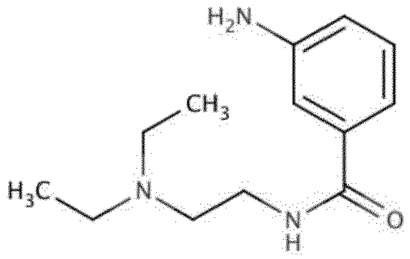

Structural Formula (1)

Preparation and evaluations of a liquid composition were performed in the same manner as in Example 44, except that the obtained surface modified carbon-based material (AB-benzamide) was used, and the dispersing agent was changed from S13940 to MALIALIM® SC-0708A (may be referred to as "SC0708A" hereinafter, available from NOF Corporation). The composition and results are presented in Tables 3-1-1, 3-1-2, and 3-2.

(Examples 46 to 47)

$LiNbO_3$/NCM1 serving as the active material and obtained in the same manner as in Example 1, AB serving as a conductive agent and vacuum dried for 12 hours at 80°C, S13940 serving as a dispersing agent for dispersing the conductive agent and vacuum dried for 12 hours at room temperature, PBMA serving as a binder and vacuum dried for 12 hours at 80°C, methyl hexanoate (available from Tokyo Chemical Industry Co., Ltd.) serving as an organic solvent, the moisture content of which had been adjusted according to the above-described method, and a solid electrolyte LPSC ($D_{50}$ < 2.0 um) synthesized according to the above-described method were mixed according to the solid content and component mixing ratios as presented in Tables 3-1-1 and 3-1-2 to prepare a liquid composition. The liquid composition was evaluated in the same manner as in Example 36.

Moreover, the ejection behavior was evaluated according to the above-described method. The result of the ejection behavior evaluation was "a." Therefore, the liquid composition was ejected onto an aluminum foil fixed on a hotplate, and the liquid composition was dried on the hotplate heated at 120°C to thereby produce a positive electrode having a basis weight of 20 $mg/cm^2$. The capacity rate characteristics of the secondary battery cell were measured according to the above-described method using the obtained positive electrode. The composition and results are presented in Tables 3-1-1, 3-1-2, and 3-2.

(Example 48)

Preparation of a carbon-based material dispersion liquid, preparation of a liquid composition, and evaluations of the liquid composition were performed in the same manner as in Example 43, except that the solid electrolyte LPSC ($D_{50}$ < 2.0 um) synthesized according to the above-described method was mixed during the preparation of the liquid composition. The composition and results are presented in Tables 3-1-1, 3-1-2, and 3-2.

(Example 49)

Preparation of a carbon-based material dispersion liquid from which a free dispersing agent was removed, preparation of a liquid composition, and evaluations of the liquid composition were performed in the same manner as in Example 44, except that the solid electrolyte LPSC ($D_{50}$ < 2.0 um) synthesized according to the above-described method was mixed during the preparation of the liquid composition. The composition and results are presented in Tables 3-1-1, 3-1-2, and 3-2.

(Example 50)

Preparation and evaluations of a liquid composition were performed in the same manner as in Example 49, except that the obtained surface modified carbon-based material (AB-benzamide) was used, and the dispersing agent was changed from S13940 to MALIALIM® SC-0708A (may be referred to as "SC0708A" hereinafter, available from NOF Corporation). The composition and results are presented in Tables 3-1-1, 3-1-2, and 3-2.

(Comparative Example 13)

A liquid composition was prepared, and evaluations were performed in the same manner as in Example 46, except that anisole was used as the organic solvent.

The result of the ejection behavior evaluation was "b." Therefore, a film of the liquid composition was formed on an aluminum foil by bar coating, and the liquid composition was dried on a hotplate heated at 120°C to thereby produce a positive electrode having a basis weight of 20 mg/cm$^2$. The capacity rate characteristics of the secondary battery cell were measured according to the above-described method using the obtained positive electrode. The composition and results are presented in Tables 3-1-1, 3-1-2, and 3-2.

(Comparative Examples 14 to 15)

A liquid composition was prepared, and evaluations were performed in the same manner as in Comparative Example 13, except that the amount of the dispersing agent was changed as presented in Tables 3-1-1 and 3-1-2.

In Comparative Example 14, the result of the ejection behavior evaluation was "b." Therefore, a film of the liquid composition was formed on an aluminum foil by bar coating, and the liquid composition was dried on a hotplate heated at 120°C to thereby produce a positive electrode having a basis weight of 20 mg/cm$^2$. The capacity rate characteristics of the secondary battery cell were measured according to the above-described method using the obtained positive electrode. The composition and results are presented in Tables 3-1-1, 3-1-2, and 3-2.

In Comparative Example 15, the result of the ejection behavior evaluation was "a." Subsequently, the liquid composition was ejected onto an aluminum foil fixed on a hotplate, and the liquid composition was dried on the hotplate heated at 120°C to thereby produce a positive electrode having a basis weight of 20 mg/cm$^2$. The capacity rate characteristics of the secondary battery cell were measured according to the above-described method using the obtained positive electrode. The composition and results are presented in Tables 3-1-1, 3-1-2, and 3-2.

[Table 1-1]

| | Liquid composition | | | | | | | | |
|---|---|---|---|---|---|---|---|---|---|
| | Oxide-based active material | | | | Organic solvent | | | Solid content [wt%] | Moisture content [ppm] |
| | core | shell | d50 [μm] | amount | type | R1 | R2 | | |
| | type | type | | | | Carbon number | Carbon number | | |
| Ex. 1 | NCM1 | $LiNbO_3$ | 3.5 | 100.0 | methyl hexanoate | 5 | 1 | 60.0 | 1.0 |
| Ex. 2 | NCM1 | $LiNbO_3$ | 3.5 | 100.0 | methyl hexanoate | 5 | 1 | 60.0 | 12.0 |
| Ex. 3 | NCM1 | $LiNbO_3$ | 3.5 | 100.0 | methyl hexanoate | 5 | 1 | 60.0 | 50.0 |
| Comp. Ex. 1 | NCM1 | $LiNbO_3$ | 3.5 | 100.0 | methyl hexanoate | 5 | 1 | 60.0 | 0.5 |
| Comp. Ex. 2 | NCM1 | $LiNbO_3$ | 3.5 | 100.0 | methyl hexanoate | 5 | 1 | 60.0 | 68.5 |
| Comp. Ex. 3 | NCM1 | $LiNbO_3$ | 3.5 | 100.0 | methyl hexanoate | 5 | 1 | 60.0 | 225.0 |
| Ex. 4 | NCM1 | $LiNbO_3$ | 3.5 | 100.0 | ethyl acetate | 1 | 2 | 60.0 | 3.3 |
| Ex. 5 | NCM1 | $LiNbO_3$ | 3.5 | 100.0 | propyl acetate | 1 | 3 | 60.0 | 3.4 |
| Ex. 6 | NCM1 | $LiNbO_3$ | 3.5 | 100.0 | hexyl acetate | 1 | 6 | 60.0 | 3.9 |
| Ex. 7 | NCM1 | $LiNbO_3$ | 3.5 | 100.0 | methyl propionate | 2 | 1 | 60.0 | 3.8 |
| Ex. 8 | NCM1 | $LiNbO_3$ | 3.5 | 100.0 | propyl propionate | 2 | 3 | 60.0 | 2.3 |

(continued)

| | Liquid composition | | | | | | | | |
|---|---|---|---|---|---|---|---|---|---|
| | Oxide-based active material | | | | Organic solvent | | | Solid content [wt%] | Moisture content [ppm] |
| | core type | shell type | d50 [μm] | amount | type | R1 Carbon number | R2 Carbon number | | |
| Ex. 9 | NCM1 | $LiNbO_3$ | 3.5 | 100.0 | methyl butyrate | 3 | 1 | 60.0 | 2.5 |
| Ex. 10 | NCM1 | $LiNbO_3$ | 3.5 | 100.0 | ethyl butyrate | 3 | 2 | 60.0 | 3.5 |
| Ex. 11 | NCM1 | $LiNbO_3$ | 3.5 | 100.0 | propyl butyrate | 3 | 3 | 60.0 | 4.5 |
| Ex. 12 | NCM1 | $LiNbO_3$ | 3.5 | 100.0 | butyl butyrate | 3 | 4 | 60.0 | 49.7 |
| Ex. 13 | NCM1 | $LiNbO_3$ | 3.5 | 100.0 | methyl valerate | 4 | 1 | 60.0 | 15.0 |
| Ex. 14 | NCM1 | $LiNbO_3$ | 3.5 | 100.0 | ethyl valerate | 4 | 2 | 60.0 | 2.6 |
| Ex. 15 | NCM1 | $LiNbO_3$ | 3.5 | 100.0 | butyl valerate | 4 | 4 | 60.0 | 8.0 |
| Ex. 16 | NCM1 | $LiNbO_3$ | 3.5 | 100.0 | isoamyl valerate | 4 | 5 | 60.0 | 12.0 |
| Ex. 17 | NCM1 | $LiNbO_3$ | 3.5 | 100.0 | ethyl hexanoate | 5 | 2 | 60.0 | 4.6 |
| Ex. 18 | NCM1 | $LiNbO_3$ | 3.5 | 100.0 | propyl hexanoate | 5 | 3 | 60.0 | 7.8 |
| Ex. 19 | NCM1 | $LiNbO_3$ | 3.5 | 100.0 | butyl hexanoate | 5 | 4 | 60.0 | 16.0 |
| Ex. 20 | NCM1 | $LiNbO_3$ | 3.5 | 100.0 | hexyl hexanoate | 5 | 6 | 60.0 | 11.9 |

[Table 1-2]

| | Evaluation items | | | | | | |
|---|---|---|---|---|---|---|---|
| | Dispersibility evaluation | | | Dispersion stability evaluation | | | |
| | D50 [μm] | D50/d50 [-] | judgement | viscosity [mPa·s] 100 rpm | viscosity [mPa·s] 10 rpm | TI [-] | judgement |
| Ex. 1 | 4.3 | 1.2 | a | 5.3 | 3.0 | 0.6 | a |
| Ex. 2 | 3.7 | 1.1 | a | 5.4 | 3.0 | 0. 6 | a |
| Ex. 3 | 4.2 | 1.2 | a | 5.2 | 3.1 | 0. 6 | a |
| Comp. Ex. 1 | 7.8 | 2.2 | c | NA | NA | NA | NA |
| Comp. Ex. 2 | 8.3 | 2.4 | c | NA | NA | NA | NA |
| Comp. Ex. 3 | 13.4 | 3.8 | c | NA | NA | NA | NA |
| Ex. 4 | 4.4 | 1.3 | a | 7.3 | 16.2 | 2.2 | c |

(continued)

| | Evaluation items | | | | | | |
|---|---|---|---|---|---|---|---|
| | Dispersibility evaluation | | | Dispersion stability evaluation | | | |
| | D50 [μm] | D50/d50 [-] | judgement | viscosity [mPa·s] | | TI [-] | judgement |
| | | | | 100 rpm | 10 rpm | | |
| Ex. 5 | 4.7 | 1.3 | a | 8.8 | 24.2 | 2.7 | c |
| Ex. 6 | 3.7 | 1.0 | a | 8.7 | 20.7 | 2.4 | c |
| Ex. 7 | 4.4 | 1.3 | a | 7.2 | 15.5 | 2.1 | c |
| Ex. 8 | 4.3 | 1.2 | a | 7.7 | 16.0 | 2.1 | c |
| Ex. 9 | 4.3 | 1.2 | a | 5.2 | 5.7 | 1.1 | a |
| Ex. 10 | 4.0 | 1.1 | a | 4.8 | 4.2 | 0.9 | a |
| Ex. 11 | 4.4 | 1.2 | a | 8.0 | 16.5 | 2.1 | c |
| Ex. 12 | 4.0 | 1.2 | a | 7.2 | 16.6 | 2.3 | c |
| Ex. 13 | 3.8 | 1.1 | a | 4.8 | 5.2 | 1.1 | a |
| Ex. 14 | 3.8 | 1.1 | a | 5.0 | 3.3 | 0.6 | a |
| Ex. 15 | 3.7 | 1.0 | a | 8.8 | 18.8 | 2.1 | c |
| Ex. 16 | 3.8 | 1.1 | a | 9.2 | 19.0 | 2.1 | c |
| Ex. 17 | 3.9 | 1.1 | a | 7.9 | 6.5 | 0.8 | a |
| Ex. 18 | 3.9 | 1.1 | a | 8.5 | 17.3 | 2.0 | c |
| Ex. 19 | 3.8 | 1.1 | a | 9.0 | 21.0 | 2.3 | c |
| Ex. 20 | 4.3 | 1.2 | a | 13.5 | 29.5 | 2.2 | c |

[Table 2-1]

| | Liquid composition | | | | | | | | |
|---|---|---|---|---|---|---|---|---|---|
| | Oxide-based active material | | | | Organic solvent | | | Solid content [wt%] | Moisture content [ppm] |
| | core | shell | d50 [μm] | amount | type | R1 | R2 | | |
| | type | type | | | | carbon number | carbon number | | |
| Ex. 21 | NCM1 | $LiNbO_3$ | 3.5 | 100.0 | methyl heptanoate | 6 | 1 | 60.0 | 5.5 |
| Ex. 22 | NCM1 | $LiNbO_3$ | 3.5 | 100.0 | ethyl heptanoate | 6 | 2 | 60.0 | 5.0 |
| Ex. 23 | NCM1 | $LiNbO_3$ | 3.5 | 100.0 | butyl heptanoate | 6 | 4 | 60.0 | 9.3 |
| Ex. 24 | NCM1 | $LiNbO_3$ | 3.5 | 100.0 | ethyl decanoate | 9 | 2 | 60.0 | 13.2 |
| Ex. 25 | NCM1 | $LiNbO_3$ | 3.5 | 100.0 | isobutyl acetate | 1 | 4 | 60.0 | 45.4 |
| Ex. 26 | NCM1 | $LiNbO_3$ | 3.5 | 100.0 | methyl isovalerate | 4 | 1 | 60.0 | 32.1 |
| Ex. 27 | NCM1 | $LiNbO_3$ | 3.5 | 100.0 | ethyl isovalerate | 4 | 2 | 60.0 | 22.1 |

(continued)

| | Liquid composition | | | | | | | | |
|---|---|---|---|---|---|---|---|---|---|
| | Oxide-based active material | | | | Organic solvent | | | Solid content [wt%] | Moisture content [ppm] |
| | core | shell | d50 [μm] | amount | type | R1 | R2 | | |
| | type | type | | | | carbon number | carbon number | | |
| Ex. 28 | NCM1 | $LiNbO_3$ | 3.5 | 100.0 | butyl isovalerate | 4 | 4 | 60.0 | 5.5 |
| Ex. 29 | NCM1 | $LiNbO_3$ | 3.5 | 100.0 | isobutyl isovalerate | 4 | 4 | 60.0 | 7.8 |
| Ex. 30 | NCM1 | $LiNbO_3$ | 3.5 | 100.0 | isoamyl isovalerate | 4 | 5 | 60.0 | 4.1 |
| Comp. Ex. 4 | NCM1 | $LiNbO_3$ | 3.5 | 100.0 | hexyl acetate | 1 | 6 | 60.0 | 93.2 |
| Comp. Ex. 5 | NCM1 | $LiNbO_3$ | 3.5 | 100.0 | ethyl butyrate | 3 | 2 | 60.0 | 0.4 |
| Comp. Ex. 6 | NCM1 | $LiNbO_3$ | 3.5 | 100.0 | ethyl valerate | 4 | 2 | 60.0 | 423.4 |
| Comp. Ex. 7 | NCM1 | $LiNbO_3$ | 3.5 | 100.0 | ethyl heptanoate | 6 | 2 | 60.0 | 149.9 |
| Comp. Ex. 8 | NCM1 | $LiNbO_3$ | 3.5 | 100.0 | isobutyl acetate | 1 | 4 | 60.0 | 821.0 |
| Comp. Ex. 9 | NCM1 | $LiNbO_3$ | 3.5 | 100.0 | diethyl carbonate | 2 | 2 | 60.0 | 2.7 |
| Comp. Ex. 10 | NCM1 | $LiNbO_3$ | 3.5 | 100.0 | diisopentyl ether | 5 | 5 | 60.0 | 44.0 |
| Comp. Ex. 11 | NCM1 | $LiNbO_3$ | 3.5 | 100.0 | anisole | | | 60.0 | 5.0 |
| Ex. 31 | NCM1 | - | 3.5 | 100.0 | methyl hexanoate | 5 | 1 | 60.0 | 10.4 |
| Ex. 32 | NCM2 | - | 8.5 | 100.0 | methyl hexanoate | 5 | 1 | 60.0 | 11.8 |
| Ex. 33 | NCA | - | 3.5 | 100.0 | methyl hexanoate | 5 | 1 | 60.0 | 12.5 |
| Ex. 34 | NCM1 | $Li_4Ti_5O_{12}$ | 3.5 | 100.0 | methyl hexanoate | 5 | 1 | 60.0 | 33.3 |
| Ex. 35 | NCM1 | $LiTaO_3$ | 3.5 | 100.0 | methyl hexanoate | 5 | 1 | 60.0 | 21.1 |

[Table 2-2]

| | Evaluation items | | | | | | |
|---|---|---|---|---|---|---|---|
| | Dispersibility evaluation | | | Dispersion stability evaluation | | | |
| | D50 [μm] | D50/d50 [-] | judgement | viscosity [mPa·s] | | TI [-] | judgement |
| | | | | 100 rpm | 10 rpm | | |
| Ex. 21 | 3.8 | 1.1 | a | 4.8 | 4.2 | 0. 9 | a |
| Ex. 22 | 3.8 | 1.1 | a | 5.1 | 4.2 | 0.8 | a |
| Ex. 23 | 3.8 | 1.1 | a | 6.6 | 14.2 | 2.2 | c |
| Ex. 24 | 3.6 | 1.0 | a | 11.0 | 17.0 | 1.5 | b |
| Ex. 25 | 4.2 | 1.2 | a | 13.5 | 38.8 | 2.9 | c |
| Ex. 26 | 3.7 | 1.0 | a | 5.8 | 5.6 | 1.0 | a |
| Ex. 27 | 3.6 | 1.0 | a | 5.8 | 6.0 | 1.0 | a |
| Ex. 28 | 3.9 | 1.1 | a | 7.7 | 15.5 | 2.0 | c |
| Ex. 29 | 4.0 | 1.1 | a | 8.8 | 18.0 | 2.0 | c |
| Ex. 30 | 4.1 | 1.2 | a | 9.0 | 21.3 | 2.4 | c |
| Comp. Ex. 4 | 7.4 | 2.1 | c | | | | |
| Comp. Ex. 5 | 13.6 | 3.9 | c | | | | |
| Comp. Ex. 6 | 9.4 | 2.7 | c | | | | |
| Comp. Ex. 7 | 7.1 | 2.0 | c | | | | |
| Comp. Ex. 8 | 8.2 | 2.3 | c | | | | |
| Comp. Ex. 9 | 7.8 | 2.2 | c | | | | |
| Comp. Ex. 10 | 10.2 | 2.9 | c | | | | |
| Comp. Ex. 11 | 60.9 | 17.4 | c | | | | |
| Ex. 31 | 3.8 | 1.1 | a | 5.3 | 3.1 | 0. 6 | a |
| Ex. 32 | 10.3 | 1.2 | a | 7.7 | 5.8 | 0.8 | a |
| Ex. 33 | 3.9 | 1.1 | a | 5.0 | 3.9 | 0.8 | a |
| Ex. 34 | 4.0 | 1.1 | a | 5.2 | 3.1 | 0. 6 | a |
| Ex. 35 | 4.2 | 1.2 | a | 5.3 | 3.0 | 0. 6 | a |

[Table 3-1-1]

| | Liquid composition | | | | | | | | | | |
|---|---|---|---|---|---|---|---|---|---|---|---|
| | Oxide-based active material | | | | Conductive agent | | Dispersing agent | | Binder PBMA | Solid electrolyte LPSC | Organic solvent |
| | Core | Shell | d50 [μm] | Amount | Type | Amount | S13940 | SC0708A | | | Type |
| | Type | Type | | | | | Amount | Amount | Amount | Amount | |
| Ex. 36 | NCM1 | - | 3.5 | 100.0 | AB | 5.0 | 1.0 | - | 3.0 | - | methyl hexanoate |
| Ex. 37 | NCM1 | - | 3.5 | 100.0 | AB | 5.0 | 2.0 | - | 3.0 | - | methyl hexanoate |
| Ex. 38 | NCM1 | - | 3.5 | 100.0 | AB | 5.0 | 1.0 | - | 3.0 | - | methyl hexanoate |
| Comp. Ex. 12 | NCM1 | - | 3.5 | 100.0 | AB | 5.0 | 1.0 | - | 3.0 | - | anisole |
| Ex. 39 | NCM1 | - | 3.5 | 100.0 | AB | 5.0 | 1.0 | - | 3.0 | - | methyl hexanoate |
| Ex. 40 | NCM1 | - | 3.5 | 100.0 | AB | 5.0 | <1.0 | - | 3.0 | - | methyl hexanoate |
| Ex. 41 | NCM1 | - | 3.5 | 100.0 | AB-COOH | 5.0 | 1.0 | - | 3.0 | - | methyl hexanoate |
| Ex. 42 | NCM1 | - | 3.5 | 100.0 | AB-COOH | 5.0 | <1.0 | - | 3.0 | - | methyl hexanoate |
| Ex. 43 | NCM1 | - | 3.5 | 100.0 | AB-COOLi | 5.0 | 1.0 | - | 3.0 | - | methyl hexanoate |
| Ex. 44 | NCM1 | - | 3.5 | 100.0 | AB-COOLi | 5.0 | <1.0 | - | 3.0 | - | methyl hexanoate |
| Ex. 45 | NCM1 | - | 3.5 | 100.0 | AB-benzamide | 5.0 | - | <1.0 | 3.0 | - | methyl hexanoate |
| Ex. 46 | NCM1 | $LiNbO_3$ | 3.5 | 100.0 | AB | 5.0 | 1.0 | - | 3.0 | 33.3 | methyl hexanoate |
| Ex. 47 | NCM1 | $LiNbO_3$ | 3.5 | 100.0 | AB | 5.0 | 2.0 | - | 3.0 | 33.3 | methyl hexanoate |
| Ex. 48 | NCM1 | $LiNbO_3$ | 3.5 | 100.0 | AB-COOLi | 5.0 | 1.0 | - | 3.0 | 33.3 | methyl hexanoate |
| Ex. 49 | NCM1 | $LiNbO_3$ | 3.5 | 100.0 | AB-COOLi | 5.0 | <1.0 | - | 3.0 | 33.3 | methyl hexanoate |
| Ex. 50 | NCM1 | $LiNbO_3$ | 3.5 | 100.0 | AB-COOLi | 5.0 | - | <1.0 | 3.0 | 33.3 | methyl hexanoate |
| Comp. Ex. 13 | NCM1 | $LiNbO_3$ | 3.5 | 100.0 | AB | 5.0 | 1.0 | - | 3.0 | 33.3 | anisole |
| Comp. Ex. 14 | NCM1 | $LiNbO_3$ | 3.5 | 100.0 | AB | 5.0 | 2.0 | - | 3.0 | 33.3 | anisole |
| Comp. Ex. 15 | NCM1 | $LiNbO_3$ | 3.5 | 100.0 | AB | 5.0 | 3.0 | - | 3.0 | 33.3 | anisole |

[Table 3-1-2]

| | Liquid composition | | Preparation of carbon-based material dispersion liquid | |
|---|---|---|---|---|
| | Solid content [wt%] | Moisture content [ppm] | Dispersing | Refining |
| Ex. 36 | 60.0 | 28.2 | | |
| Ex. 37 | 60.0 | 25 . 6 | | |
| Ex. 38 | 70.0 | 49.8 | | |
| Comp. Ex. 12 | 70.0 | 32.7 | | |
| Ex. 39 | 60.0 | 30.4 | Performed | |
| Ex. 40 | 60.0 | 33.3 | Performed | Performed |
| Ex. 41 | 60.0 | 20.1 | Performed | |
| Ex. 42 | 60.0 | 39.9 | Performed | Performed |
| Ex. 43 | 60.0 | 20.1 | Performed | |
| Ex. 44 | 60.0 | 39.9 | Performed | Performed |
| Ex. 45 | 60.0 | 39.9 | Performed | Performed |
| Ex. 46 | 60.0 | 34.0 | | |
| Ex. 47 | 60.0 | 32.2 | | |
| Ex. 48 | 60.0 | 28.8 | Performed | |
| Ex. 49 | 60.0 | 37.9 | Performed | Performed |
| Ex. 50 | 60.0 | 40.1 | Performed | Performed |
| Comp. Ex. 13 | 60.0 | 44.0 | | |
| Comp. Ex. 14 | 60.0 | 21.5 | | |
| Comp. Ex. 15 | 60.0 | 20.8 | | |

[Table 3-2]

| | Evaluation items | | | | | | | | | |
|---|---|---|---|---|---|---|---|---|---|---|
| | Dispersibility evaluation | | | Dispersion stability evaluation | | | | Ejection evaluation | Rate test | |
| | D50 [μm] | D50/ d50 [-] | judgement | Viscosity [mPa·s] | | TI [-] | judgement | judgement | capacity retention rate [%] | judgement |
| | | | | 100 rpm | 10 rpm | | | | | |
| Ex. 36 | 3.8 | 1.1 | a | 32.7 | 52.8 | 1.6 | b | a | 82 | b |
| Ex. 37 | 4.0 | 1.1 | a | 36.7 | 65.5 | 1.8 | b | a | 61 | d |
| Ex. 38 | 3.8 | 1.1 | a | 57.7 | 112.0 | 1.9 | b | a | 83 | b |
| Comp. Ex. 12 | 8.2 | 2.3 | c | 1000.0 | 3200.0 | 3.2 | d | b | 78 | c |
| Ex. 39 | 3.8 | 1.1 | a | 32.7 | 52.6 | 1.6 | b | a | 84 | b |
| Ex. 40 | 3.8 | 1.1 | a | 34.7 | 55.8 | 1.6 | b | a | 87 | b |
| Ex. 41 | 3.8 | 1.1 | a | 16.3 | 29.8 | 1.8 | b | a | 87 | b |
| Ex. 42 | 3.8 | 1.1 | a | 15.8 | 28.8 | 1.8 | b | a | 90 | a |
| Ex. 43 | 3.7 | 1.1 | a | 16.2 | 29.2 | 1.8 | b | a | 90 | a |
| Ex. 44 | 3.8 | 1.1 | a | 15.8 | 27.6 | 1.7 | b | a | 92 | a |
| Ex. 45 | 3.8 | 1.1 | a | 17.3 | 29.2 | 1.7 | b | a | 87 | b |
| Ex. 46 | 4.3 | 1.2 | a | 30.2 | 45.5 | 1.5 | b | a | 75 | c |
| Ex. 47 | 4.0 | 1.1 | a | 35.0 | 60.3 | 1.7 | b | a | 65 | d |
| Ex. 48 | 4.0 | 1.1 | a | 20.8 | 38.8 | 1.9 | b | a | 77 | c |
| Ex. 49 | 3.9 | 1.1 | a | 20.5 | 35.5 | 1.7 | b | a | 80 | b |
| Ex. 50 | 3.9 | 1.1 | a | 22.0 | 40.2 | 1.8 | b | a | 75 | c |
| Comp. Ex. 13 | 35.6 | 10.2 | c | 1400.0 | 1400.0 | 4.0 | d | b | 70 | c |
| Comp. Ex. 14 | 20.1 | 5.7 | c | 850.0 | 850.0 | 3.9 | d | b | 65 | d |
| Comp. Ex. 15 | 4.7 | 1.3 | c | 30.7 | 30.7 | 2.8 | c | a | 40 | e |

As presented in Tables 1-1 and 1-2, it was found that excellent dispersibility of the active material was achieved with the liquid composition including at least the active material, the organic solvent, and water, where the organic solvent was methyl hexanoate represented by General Formula (A) and the amount of the water was 1 ppm or greater and 50 ppm or less (Examples 1 to 3).

On the other hand, it was observed that the liquid composition having the moisture content of less than 1 ppm or greater than 50 ppm did not have excellent dispersibility of the active material (Comparative Examples 1 to 3).

Moreover, it was found that excellent dispersibility of the active material could be achieved with any of the organic solvents represented by General Formula (A), as long as the moisture content was within the range of 1 ppm or greater and 50 ppm or less (Examples 4 to 30).

Conversely, the liquid composition having the moisture content of less than 1 ppm or greater than 50 ppm could not achieve excellent dispersibility of the active material even when the organic solvent represented by General Formula (A) was used (Comparative Examples 4 to 8). Moreover, it was found that the organic solvent having the similar structure but different from the organic solvent represented by General Formula (A), i.e., the organic solvent, in which an alkyl group was bonded to the carboxylic acid group or ether group, did not achieve excellent dispersibility of the active material (Comparative Examples 9 to 11) .

As presented in Tables 2-1 and 2-2, moreover, even if various materials were used as the active material, excellent dispersibility of the active material was similarly obtained, as long as the organic solvent represented by General Formula (A) was used and the moisture content was within the range of 1 ppm or greater and 50 ppm or less (Examples 31 to 33).

Moreover, it was found that excellent dispersibility of the active material was similarly obtained even when various materials were used as the ion-conductive oxide covering the active material (Examples 34 to 35).

When $R^1$ was selected from a C3 or greater straight-chain alkyl group and C3 or greater branched-chain alkyl group, and $R^2$ was a methyl group or an ethyl group in General formula (A) as presented in Table 1, moreover, a thixotropic index became small to achieve excellent dispersion stability of the active material particles, specific to the above-described molecular structure. Therefore, excellent dispersion stability was obtained as well as high dispersibility.

Moreover, the liquid composition including $LiNbO_3$/NCM1 as the active material, methyl hexanoate exhibiting excellent dispersibility and dispersion stability as the organic solvent, and as other components, the conductive agent, the dispersing agent for dispersing the conductive agent, and the binder could achieve excellent dispersibility of the active material and dispersion stability, leading to an excellent ejection behavior of the liquid composition. In addition, an excellent capacity retention rate of the secondary battery cell was obtained (Example 36).

When the amount of the dispersing agent was greater than the amount in Example 36 (the minimum amount for dispersing the conductive agent), moreover, excellent dispersibility of the active material and dispersion stability, which were similar to the dispersibility and dispersion stability obtained in Example 36, were maintained, but the capacity retention rate of the secondary battery cell was not desirable, which was probably due to the excessive amount of the dispersing agent (Example 37).

As demonstrated in Example 38, moreover, it was found that the excellent dispersibility of the active material and dispersion stability, which were similar to the dispersibility and dispersion stability obtained in Example 36, were maintained even when the solid content of the liquid composition was increased up to 70% by mass (Example 38).

When anisole was used as the organic solvent, conversely, the excellent dispersibility as obtained in the previous examples was not obtained, thus the thickening of the liquid composition and ejection failures occurred (Comparative Example 12).

According to the comparison above, it was found that, in Example 38 where the organic solvent represented by General Formula (A) was used, the amount of the dispersing agent for dispersing the conductive agent could be reduced, and excellent dispersibility of the active material and the low viscosity of the liquid composition were obtained.

When the carbon-based material dispersion liquid obtained by mixing the conductive agent, the dispersing agent (ionic resin), and the methyl hexanoate was obtained before mixing with the active material particles (Example 39), moreover, the excellent capacity retention rate was obtained compared to the case where the above-mentioned components were mixed at the same time (Example 36).

Moreover, it was found that an excellent capacity retention rate was obtained when refining, in which the free dispersing agent was removed from the carbon-based material dispersion liquid prepared by mixing the conductive agent, the dispersing agent (the ionic resin), and the methyl hexanoate in advance, was further performed (Examples 40, 42, 44, and 49), compared to the case where the free dispersing agent was not removed from the carbon-based material dispersion liquid. Moreover, it was found that an excellent capacity retention rate was obtained when the carbon-based material that was surface-modified with a carboxyl group serving as the acidic functional group, were used as the conductive agent (Example 41), compared to the case where the carbon-based material without surface modification was used (Example 39).

Furthermore, it was found that the capacity retention rate was further improved when the carbon-based material, in which a Li salt was used as a counterion of the carboxyl group used for surface modification, was used as the conductive

agent (Example 43).

Moreover, it was found that the liquid composition to which LPSC was added as the solid electrolyte could also have the reduced amount of the dispersing agent, achieved both excellent dispersibility and dispersion stability of the active material, leading to an excellent ejection behavior, and achieved an excellent capacity retention rate (Example 46).

When the amount of the dispersing agent was greater than the amount used in Example 46 (the minimum amount for dispersing the conductive agent), excellent dispersibility and dispersion stability of the active material were obtained as in Example 46, but the capacity retention rate of the secondary battery cell was likely to reduce probably due to the excessive amount of the dispersing agent (Example 47).

When the carbon-based material dispersion liquid was prepared in advance before mixing with the active material (Example 48), and when the process of removing the free dispersing agent was further performed (Example 49), an excellent capacity retention rate was obtained similarly to the liquid composition to which no solid electrolyte was added.

When anisole was used as the organic solvent, on the other hand, excellent dispersibility similar to the above could not be obtained so that thickening was caused and ejection failures occurred (Comparative Example 13).

When anisole was used as the organic solvent and the amount of the dispersing agent was greater than the amount used in Comparative Example 12 (the minimum amount for dispersing the conductive agent), dispersibility was improved, leading to low viscosity of the liquid composition, and the improved ejection behavior was observed. However, it was necessary to use a large amount of the dispersing agent to obtain an acceptable level of dispersibility, and the capacity retention rate of the secondary battery cell did not reach the acceptable level probably because the dispersing agent was adsorbed onto the surface of the active material to function as an interface resistance component (Comparative Examples 14 to 15).

It was found from the comparison between Example 46 and Comparative Examples 13 to 15 that Example 46, in which the organic solvent represented by General Formula (A) was used, could reduce the amount of the dispersing agent used for dispersing the conductive agent, and achieved excellent dispersibility of the active material and desirable low viscosity of the liquid composition.

Moreover, it was found that, even if refining where the free dispersing agent was removed was performed and the organic solvent having a low dielectric constant was used, a liquid composition achieving excellent dispersibility of the surface-modified carbon-based material and having both a high solid content and low viscosity could be obtained in the case where AB-benzamide, which was the surface-modified carbon-based material obtained by adding the substituent represented by General Formula (1) to the carbon material, was used as the surface-modified carbon-based material (Examples 45 and 50).

For example, embodiments of the present disclosure are as follows.

<1> A liquid composition including:

an active material;
an organic solvent represented by General Formula (A); and
water in an amount of 1 ppm or greater and 50 ppm or less,

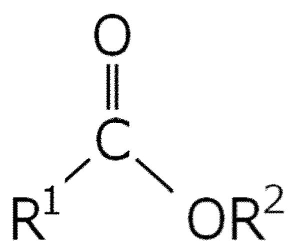

General Formula (A)

where, in General Formula (A), $R^1$ and $R^2$ are each independently a straight-chain alkyl group or a branched-chain alkyl group.

<2> The liquid composition according to <1>,

wherein $R^1$ is a straight-chain alkyl group including 3 or more carbon atoms or a branched-chain alkyl group including 3 or more carbon atoms, and
$R^2$ is a methyl group or an ethyl group.

<3> The liquid composition according to <1> or <2>, wherein the active material is in a form of particles, and a surface of each of the particles of the active material is coated with an ion-conductive oxide.
<4> The liquid composition according to any one of <1> to <3>, further including:
a carbon-based material in an amount of less than 10% by mass relative to a total amount of the active material.
<5> The liquid composition according to <4>, wherein the carbon-based material is modified with a polar functional group.
<6> The liquid composition according to <4> or <5>, wherein the carbon-based material is a surface-modified carbon-based material, in which a substituent represented by General Formula (1) is added to a carbon material,

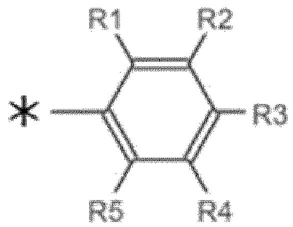

General Formula (1)

where, in General Formula (1), R1, R2, R3, R4, and R5 are each a hydrogen atom or a group represented by General Formula (2), wherein at least one of R1, R2, R3, R4, and R5 is a group represented by General Formula (2), and * represents a bonding site with the carbon material,

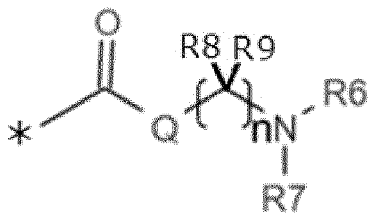

General Formula (2)

where, in General Formula (2), Q is an oxygen atom or NH, R6 and R7 are each a methyl group, an ethyl group, a n-propyl group, or an iso-propyl group, R8 and R9 are each a hydrogen atom or a methyl group, n is an integer of 2 or 3, and * is a bonding site with the substituent represented by General formula (1).
<7> The liquid composition according to any one of <4> to <6>,

wherein the liquid composition includes a composite of the carbon-based material and an ionic resin, and
the ionic resin is a resin including at least one functional group, per molecule, selected from a group consisting of a basic functional group and a basic functional group neutralized with an acidic compound.

<8> The liquid composition according to <4> to <7>, wherein the carbon-based material is a surface-modified carbon-based material including an acidic functional group, or an acidic functional group neutralized with a basic compound, or both, at a surface of the carbon-based material.
<9> The liquid composition according to <8>, wherein a counterion for the acidic functional group, or the acidic functional group neutralized with the basic compound, or both is an alkali metal salt.
<10> The liquid composition according to any one of <7> to <9>,
wherein an amount of the ionic resin is 20% by mass or less relative to the carbon-based material.
<11> A method for producing a liquid composition, the method including:

preparing a carbon-based material dispersion liquid including a carbon-based material; and
mixing an active material with the carbon-based material dispersion liquid to prepare the liquid composition of <7>.

<12> An electrode production apparatus, including:

a storage container storing the liquid composition of any one of <1> to <10>; and
an applicator configured to apply the liquid composition stored in the storage container to an electrode substrate.

<13> A method for producing an electrode, the method including:
applying the liquid composition of any one of <1> to <10> to an electrode substrate.
<14> An electrode including:

an electrode substrate; and
an electrode composite material layer disposed on the electrode substrate, the electrode composite material layer including an active material and a dispersing agent, where an amount of the dispersing agent is 0% by mass or greater and 1% by mass or less.

<15> The electrode according to <14>,
wherein the electrode composite material layer further includes an organic solvent represented by General Formula (A),

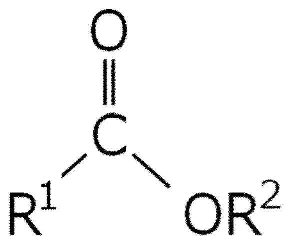

General Formula (A)

where, in General Formula (A), $R^1$ and $R^2$ are each independently a straight-chain alkyl group or a branched-chain alkyl group.

The liquid composition according to any one of <1> to <10>, the method for producing the liquid composition according to <11>, the electrode production apparatus according to <12>, the method for producing the electrode according to <13>, and the electrode according to <14> or <15> can solve the above-described various problems existing in the related art and can achieve the object of the present disclosure.

## Claims

**1.** A liquid composition, comprising:

an active material;
an organic solvent represented by General Formula (A); and
water in an amount of 1 ppm or greater and 50 ppm or less,

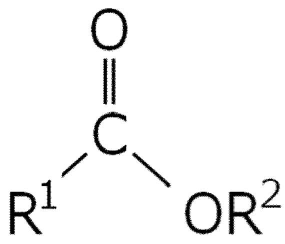

General Formula (A)

where, in General Formula (A), $R^1$ and $R^2$ are each independently a straight-chain alkyl group or a branched-chain alkyl group.

**2.** The liquid composition, according to claim 1,

wherein $R^1$ is a straight-chain alkyl group including 3 or more carbon atoms or a branched-chain alkyl group

including 3 or more carbon atoms, and
$R^2$ is a methyl group or an ethyl group.

**3.** The liquid composition, according to claim 1 or 2,
wherein the active material is in a form of particles, and a surface of each of the particles of the active material is coated with an ion-conductive oxide.

**4.** The liquid composition, according to any one of claims 1 to 3, further comprising:
a carbon-based material,
wherein a mass ratio of the carbon-based material is greater than 0 parts by mass and less than 10 parts by mass relative to 100 parts by mass of the active material.

**5.** The liquid composition according to claim 4, wherein the carbon-based material is modified with a polar functional group.

**6.** The liquid composition according to claim 4 or 5, wherein the carbon-based material is a surface-modified carbon-based material, in which a substituent represented by General Formula (1) is added to a carbon material,

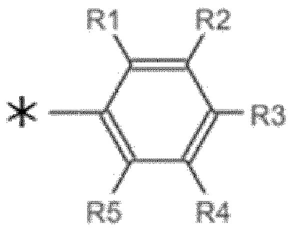

General Formula (1)

where, in General Formula (1), R1, R2, R3, R4, and R5 are each a hydrogen atom or a group represented by General Formula (2), wherein at least one of R1, R2, R3, R4, and R5 is a group represented by General Formula (2), and * represents a bonding site with the carbon material,

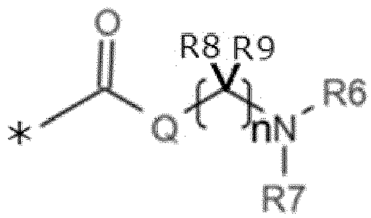

General Formula (2)

where, in General Formula (2), Q is an oxygen atom or NH, R6 and R7 are each a methyl group, an ethyl group, a n-propyl group, or an iso-propyl group, R8 and R9 are each a hydrogen atom or a methyl group, n is an integer of 2 or 3, and * is a bonding site with the substituent represented by General formula (1).

**7.** The liquid composition, according to any one of claims 4 to 6,

wherein the liquid composition includes a composite of the carbon-based material and an ionic resin, and
the ionic resin is a resin including at least one functional group, per molecule, selected from a group consisting of a basic functional group and a basic functional group neutralized with an acidic compound.

**8.** The liquid composition, according to any one of claims 4 to 7,
wherein the carbon-based material is a surface-modified carbon-based material including an acidic functional group, or an acidic functional group neutralized with a basic compound, or both, at a surface of the carbon-based material.

**9.** The liquid composition, according to claim 8,
wherein a counterion for the acidic functional group, or the acidic functional group neutralized with the basic compound, or both is an alkali metal salt.

**10.** The liquid composition, according to any one of claims 7 to 9, wherein an amount of the ionic resin is 20% by mass or less relative to the carbon-based material.

**11.** A method for producing a liquid composition, the method comprising:

preparing a carbon-based material dispersion liquid including a carbon-based material; and
mixing an active material with the carbon-based material dispersion liquid to prepare the liquid composition of claim 7.

**12.** An electrode production apparatus, comprising:

a storage container storing the liquid composition of any one of claims 1 to 10; and
an applicator configured to apply the liquid composition stored in the storage container to an electrode substrate.

**13.** A method for producing an electrode, the method comprising: applying the liquid composition of any one of claims 1 to 10 to an electrode substrate.

**14.** An electrode comprising:

an electrode substrate; and
an electrode composite material layer disposed on the electrode substrate, the electrode composite material layer including an active material and a dispersing agent, where an amount of the dispersing agent is 0% by mass or greater and 1% by mass or less.

**15.** The electrode according to claim 14, wherein the electrode composite material layer further includes an organic solvent represented by General Formula (A),

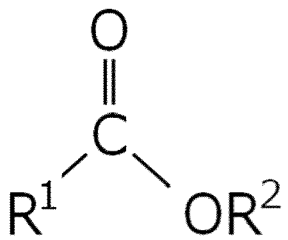

General Formula (A)

where, in General Formula (A), $R^1$ and $R^2$ are each independently a straight-chain alkyl group or a branched-chain alkyl group.

FIG.1

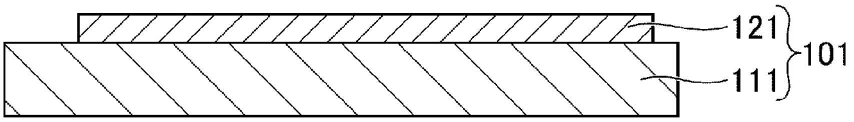


FIG.2

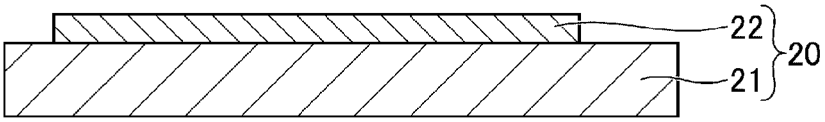


FIG.3

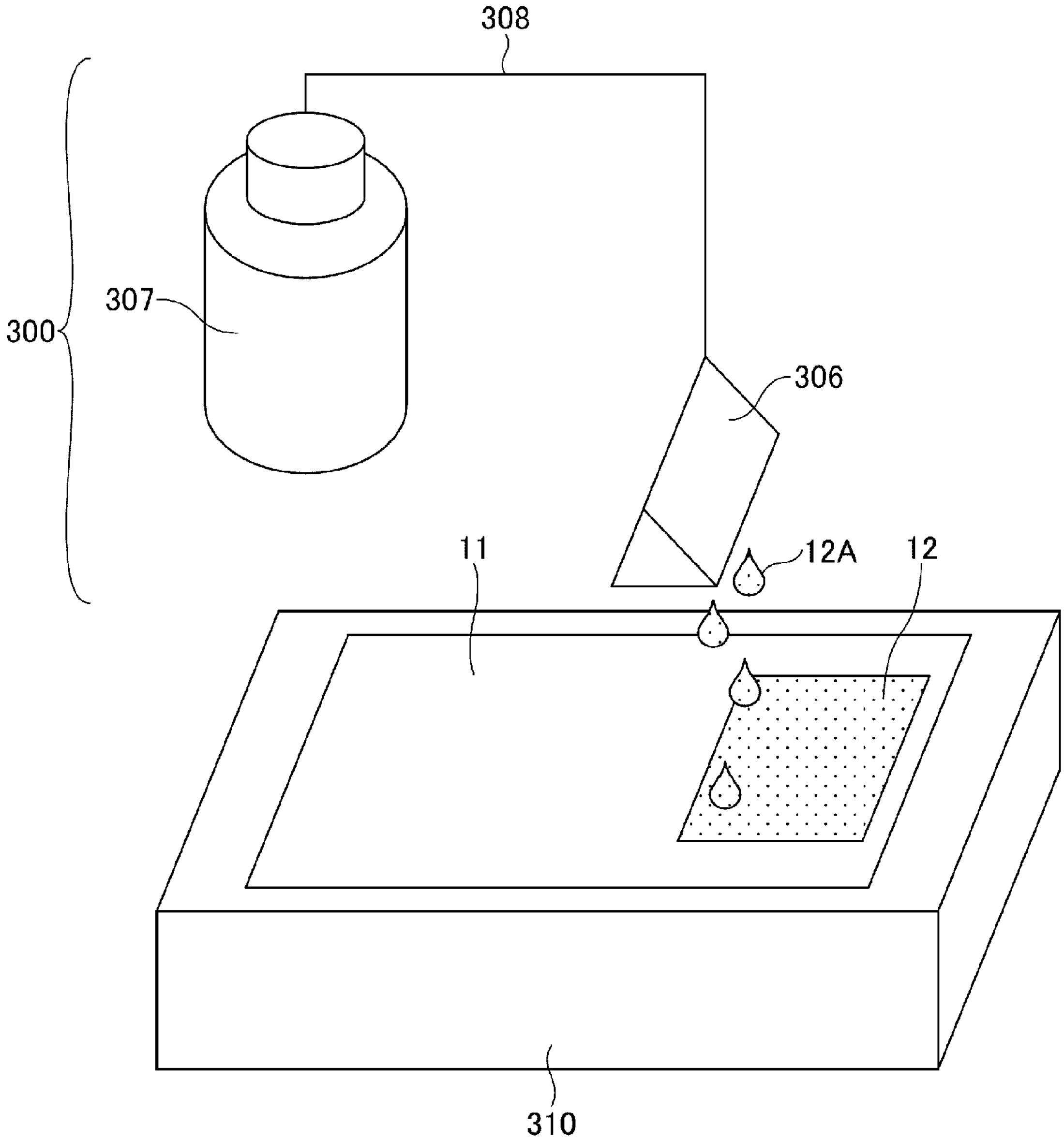

FIG.4

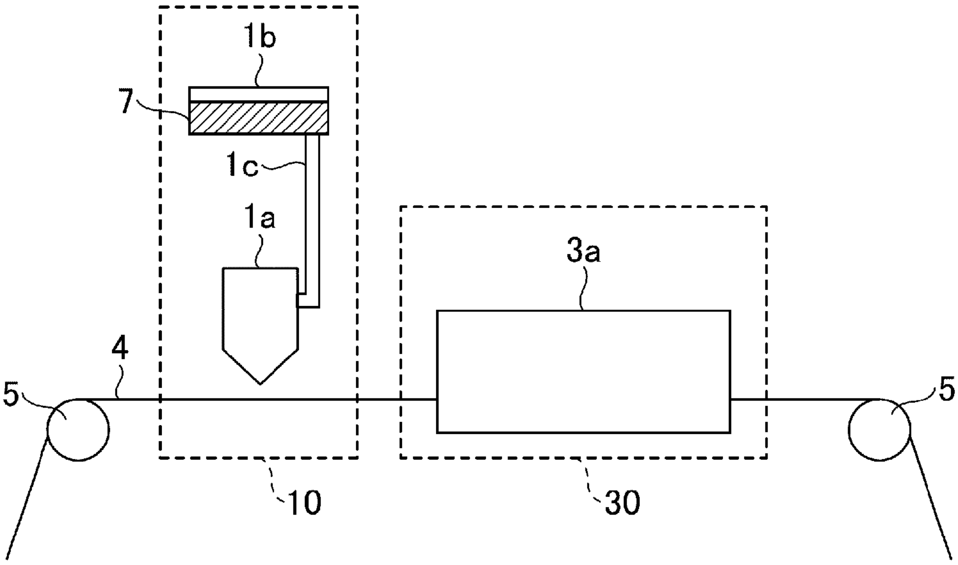


FIG.5

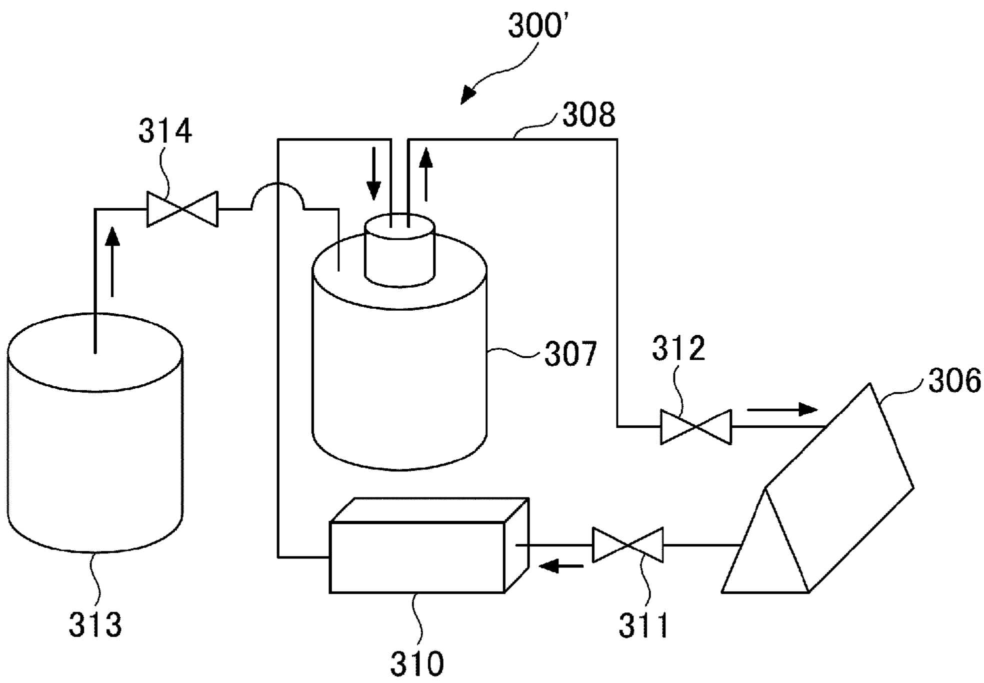

FIG.6

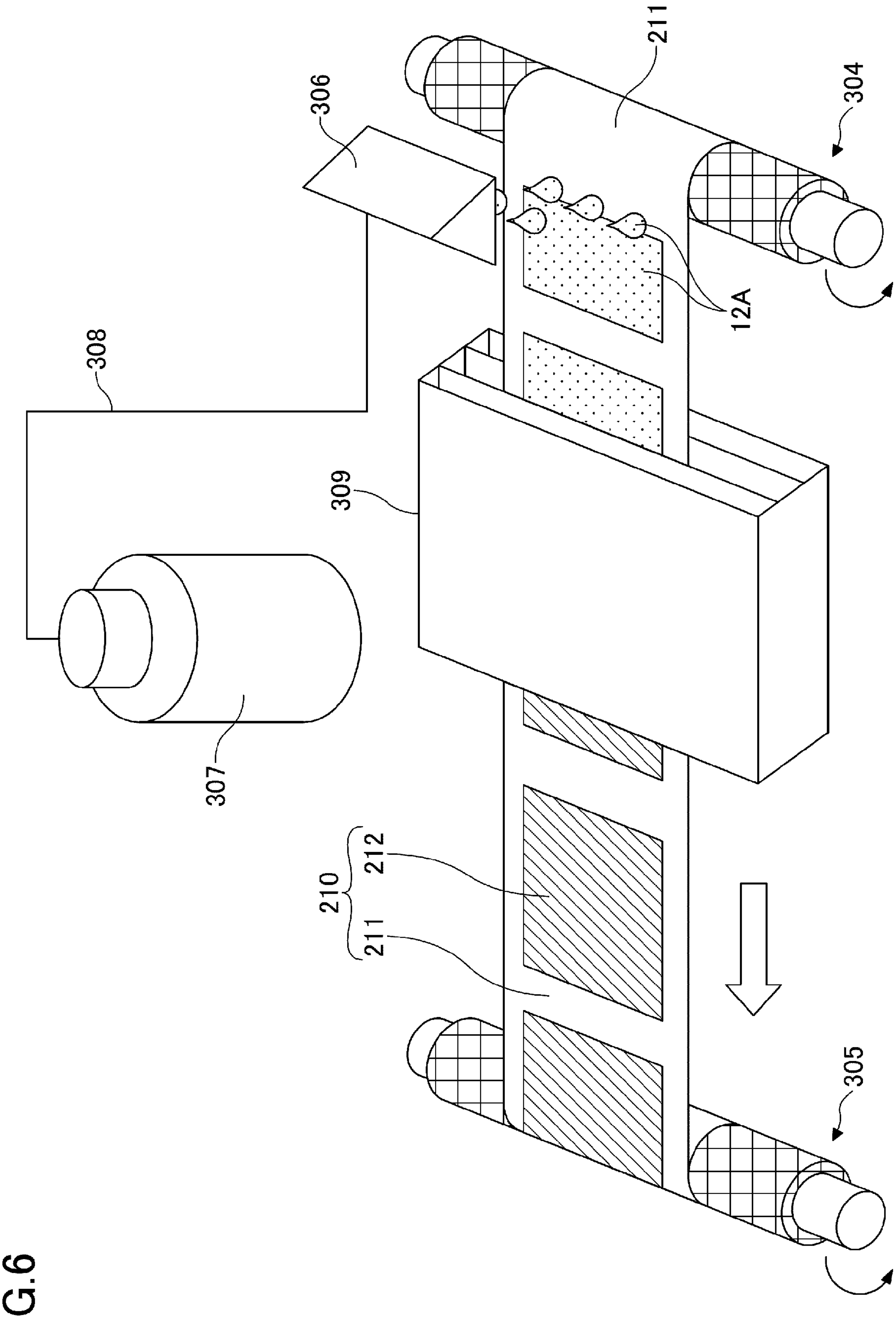

FIG.7

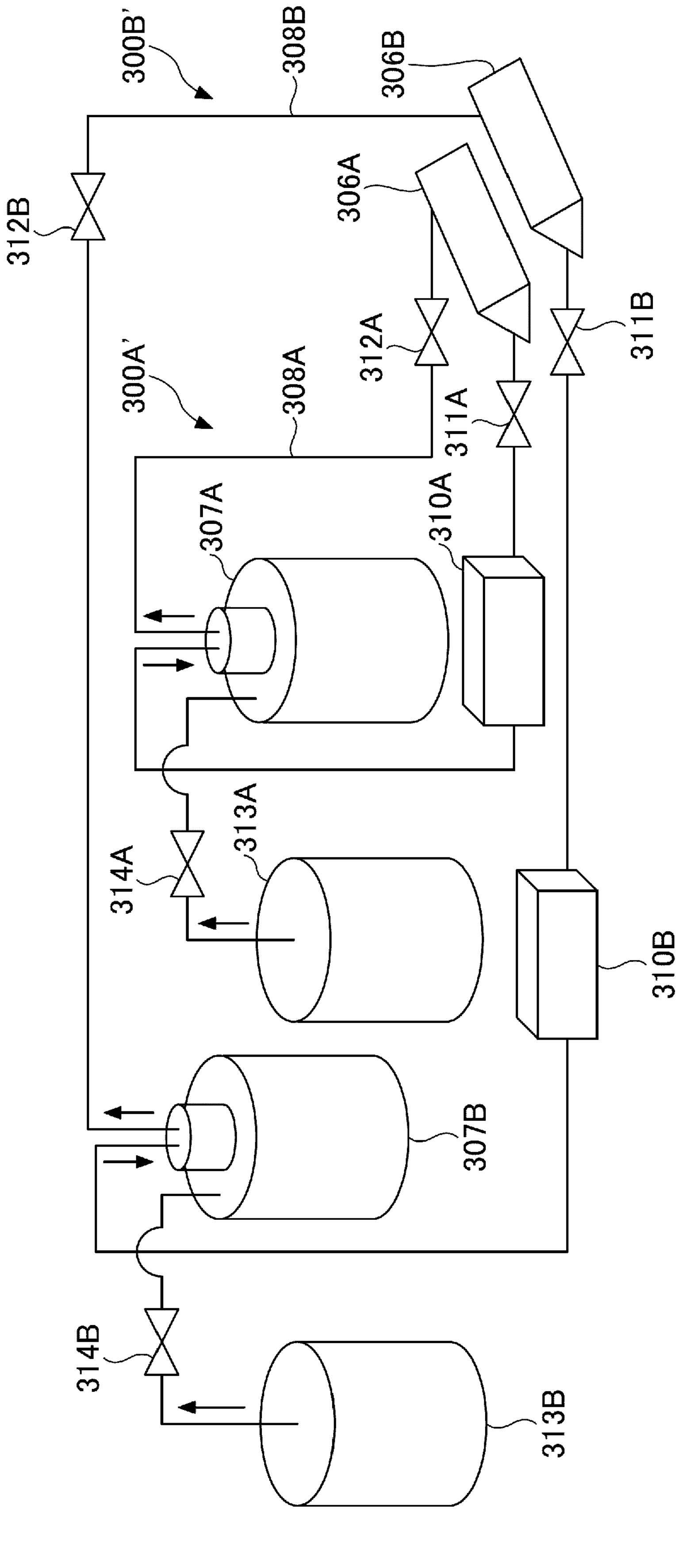
300B'
308B
306B
306A
312B
312A
311B
300A'
308A
311A
307A
310A
313A
314A
310B
307B
314B
313B

FIG.8

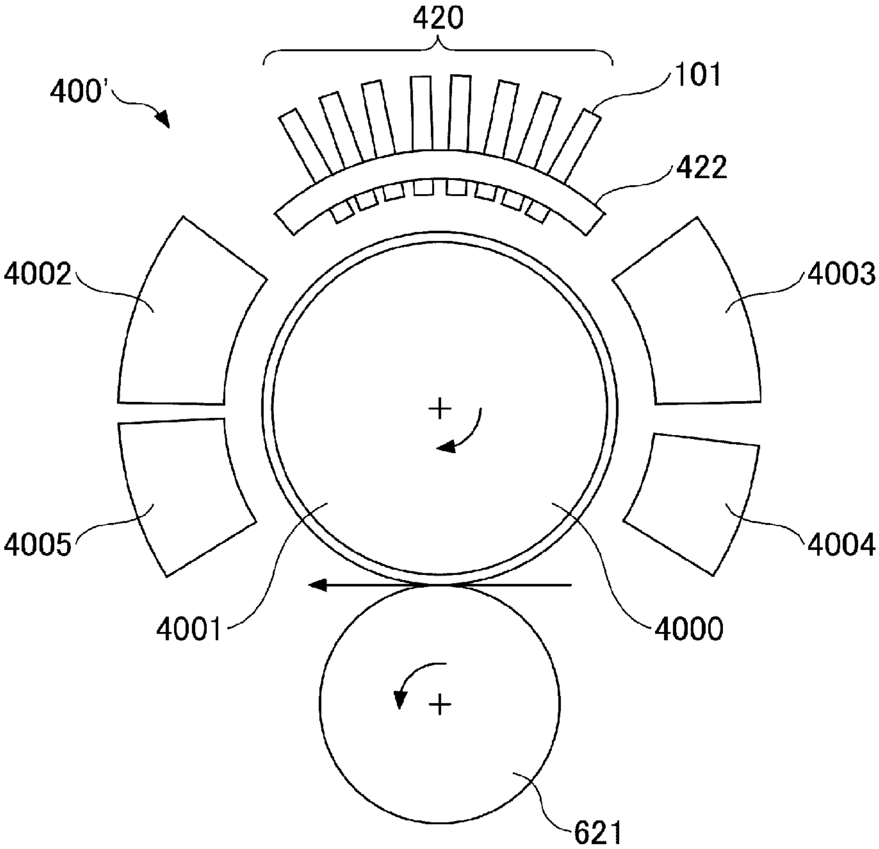
420
400'
101
422
4002
4003
4005
4004
4001
4000
621

FIG.9

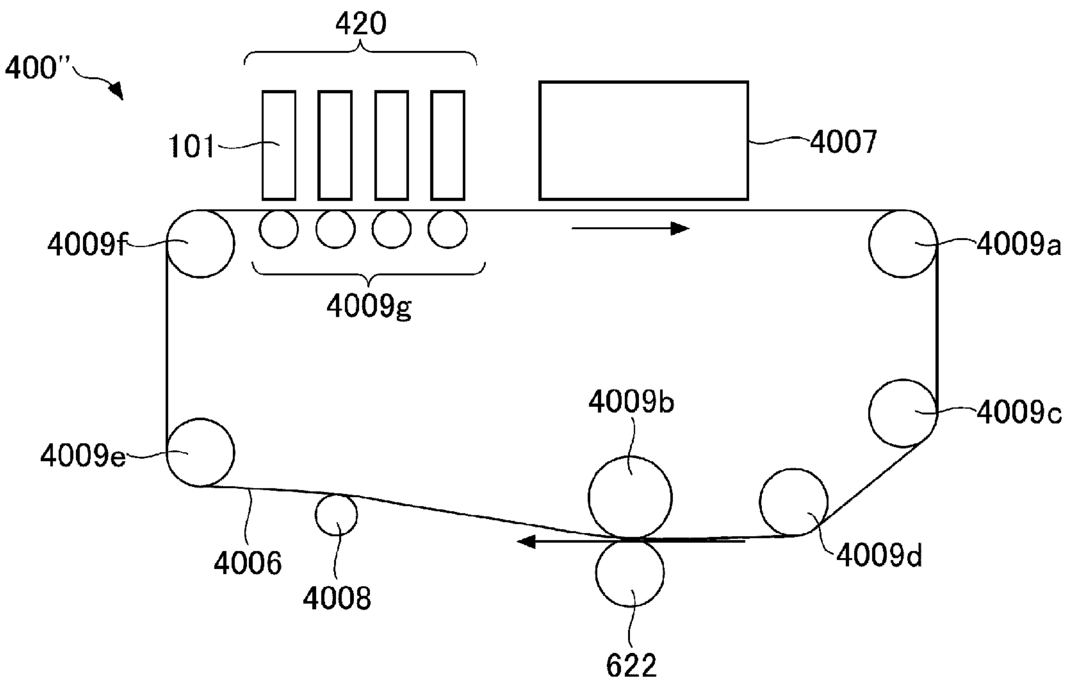
420
400''
101
4007
4009f
4009a
4009g
4009b
4009c
4009e
4009d
4006
4008
622

FIG.10

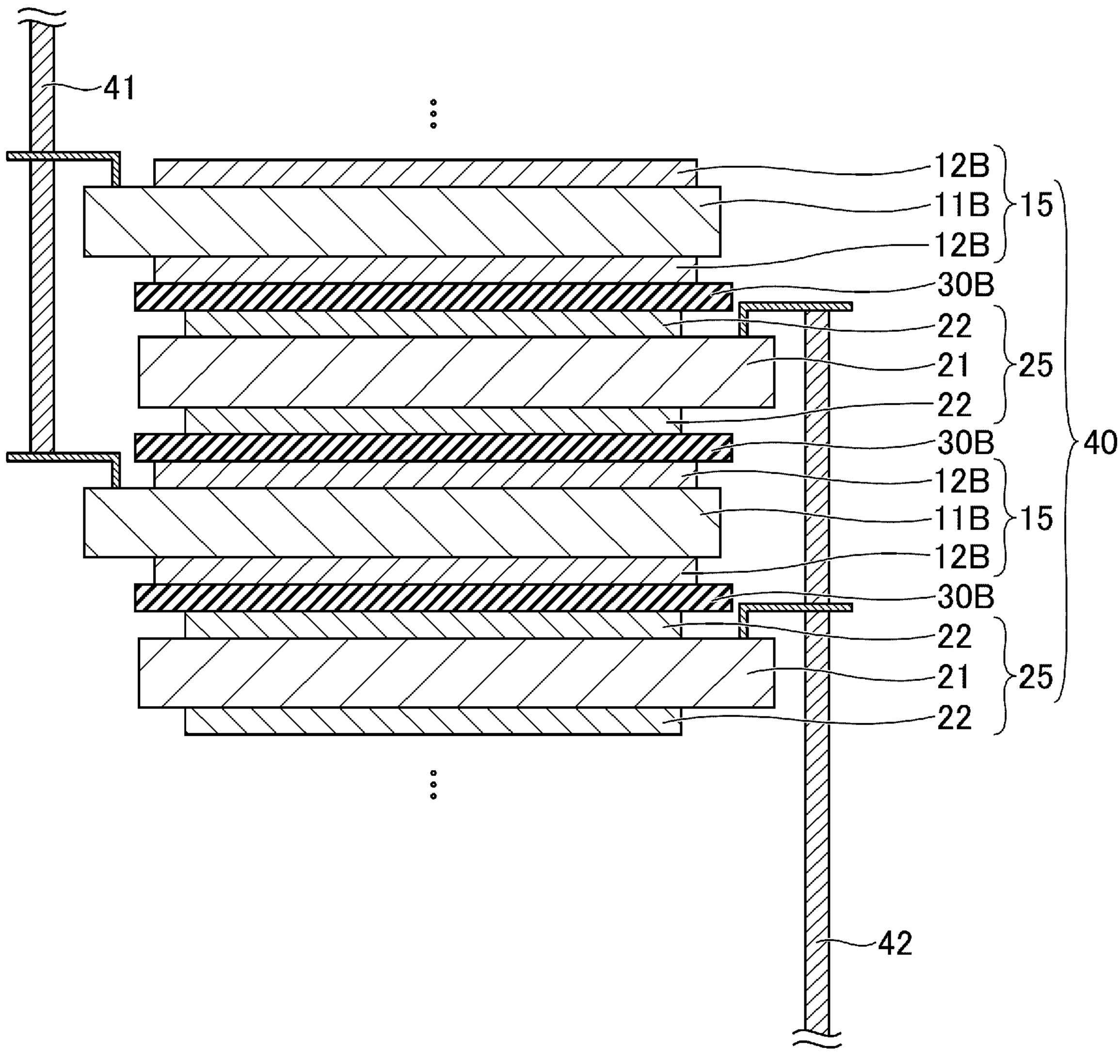
41
12B
11B
12B
15
30B
22
21
22
25
30B
12B
11B
12B
15
40
30B
22
21
22
25
42

FIG.11

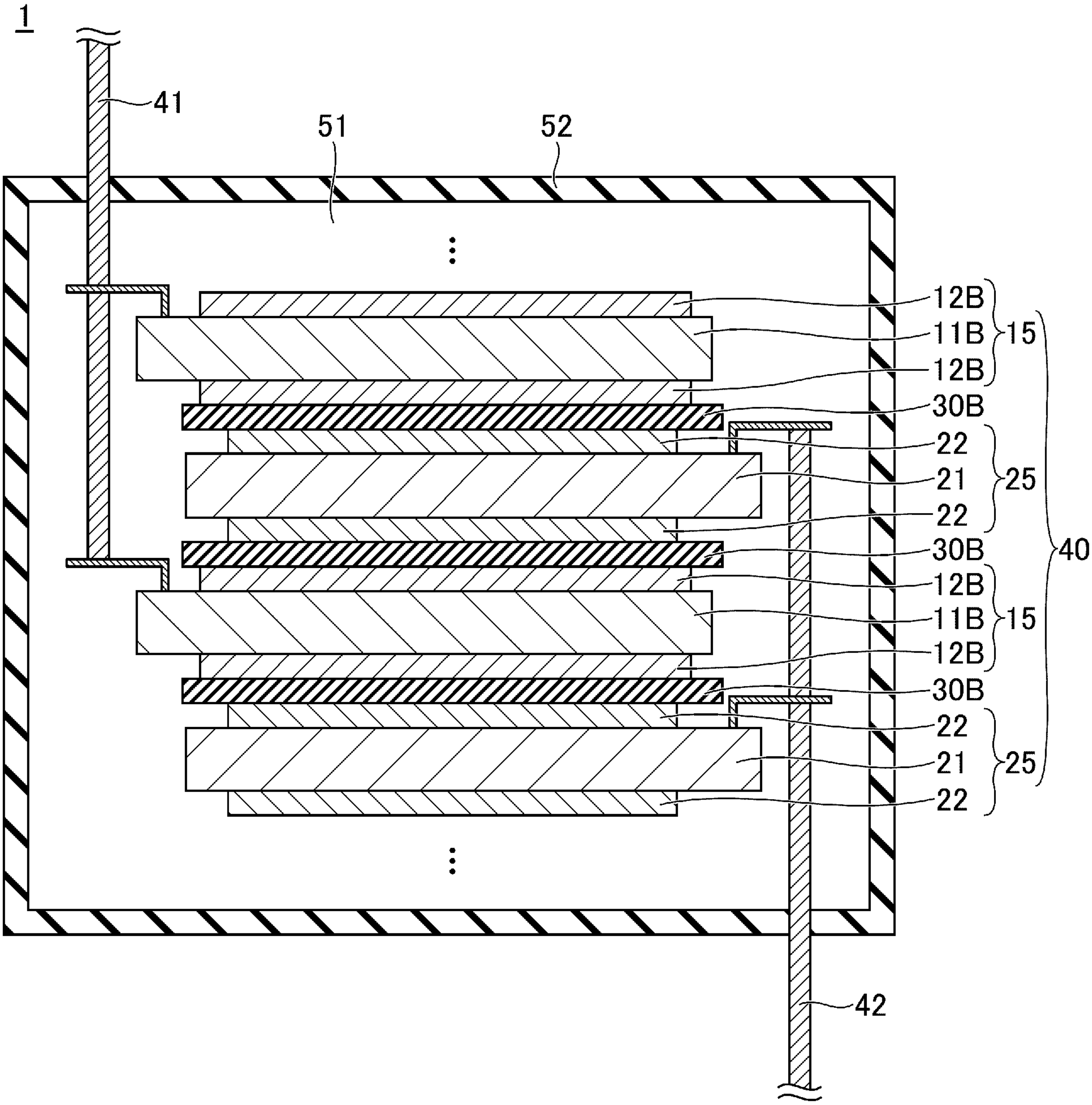
1
41
51
52
12B
11B
15
12B
30B
22
21
25
22
30B
12B
11B
15
12B
30B
22
21
25
22
40
42

Europäisches Patentamt
European Patent Office
Office européen des brevets

# EUROPEAN SEARCH REPORT

Application Number
EP 23 20 6514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 118172 A (RICOH CO LTD) 10 August 2021 (2021-08-10) * paragraph [0006] * * paragraph [0032] - paragraph [0037] * ----- | 1-13,15 | INV. H01M4/04 H01M10/0525 H01M4/13 H01M4/36 H01M4/62 H01M4/525 |
| X | US 2012/028116 A1 (CHOI WON-GIL [KR] ET AL) 2 February 2012 (2012-02-02) * paragraph [0011] * * paragraph [0013] - paragraph [0014] * ----- | 14 | |
| A | JP 2017 203054 A (SUMITOMO BAKELITE CO) 16 November 2017 (2017-11-16) * paragraphs [0020], [0027], [0039], [0045] * ----- | 1-15 | |
| A | GB 2 458 198 A (SERICOL LTD [GB]) 16 September 2009 (2009-09-16) * page 2, line 20 - line 25 * * page 7, line 15 - line 30 * ----- | 1-15 | |
| A | JP H09 328646 A (TOYO INK MFG CO) 22 December 1997 (1997-12-22) * paragraphs [0004], [0007] * ----- | 1-15 | TECHNICAL FIELDS SEARCHED (IPC) H01M |

The present search report has been drawn up for all claims

2

| Place of search | Date of completion of the search | Examiner |
|---|---|---|
| Munich | 27 February 2024 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 20 6514

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2024

| Patent document cited in search report | | Publication date | Patent family member(s) | | Publication date |
| --- | --- | --- | --- | --- | --- |
| JP 2021118172 | A | 10-08-2021 | CN 113258065 | A | 13-08-2021 |
| | | | JP 2021118172 | A | 10-08-2021 |
| US 2012028116 | A1 | 02-02-2012 | US 2012028116 | A1 | 02-02-2012 |
| | | | WO 2010117134 | A2 | 14-10-2010 |
| JP 2017203054 | A | 16-11-2017 | NONE | | |
| GB 2458198 | A | 16-09-2009 | NONE | | |
| JP H09328646 | A | 22-12-1997 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009152180 A
- WO 2019044452 A
- WO 1996018688 A
- JP 2016027092 A
- JP 2016027093 A
- WO 9618688 A


### Non-patent literature cited in the description


- *J. Power Sources,* 2018, vol. 396, 33-40
- *J. Mater. Chem. A.,* 2021, vol. 9, 4117-4125